(19) Europäisches Patentamt
European Patent Office
Office européen des brevets

(11) **EP 4 258 662 A1**

(12) **EUROPEAN PATENT APPLICATION**

(43) Date of publication:
**11.10.2023 Bulletin 2023/41**

(21) Application number: 22167219.9

(22) Date of filing: **07.04.2022**

(51) International Patent Classification (IPC):
*H04N 19/463* (2014.01)    *H04N 19/11* (2014.01)
*H04N 19/117* (2014.01)    *H04N 19/14* (2014.01)
*H04N 19/176* (2014.01)    *H04N 19/593* (2014.01)

(52) Cooperative Patent Classification (CPC):
**H04N 19/463; H04N 19/11; H04N 19/117; H04N 19/14; H04N 19/176; H04N 19/593**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventors:
• **ANDRIVON, Pierre**
**Beijing, 100085 (CN)**
• **LeLéannec, Fabrice**
**Beijing, 100085 (CN)**

(74) Representative: **Zimmermann, Tankred Klaus Schoppe, Zimmermann, Stöckeler Zinkler, Schenk & Partner mbB Patentanwälte Radlkoferstrasse 2 81373 München (DE)**

(54) **METHOD AND APPARATUS FOR DIMD EDGE DETECTION ADJUSTMENT, AND ENCODER/DECODER INCLUDING THE SAME**

(57)     A method of determining filter characteristics of a filter for filtering respective samples of a template area adjacent to a coding unit, CU, of a picture so as to obtain from the template area respective Intra Prediction Modes, IPMs, for deriving Decoder-side Intra Mode Derivation, DIMD, predictor for respective samples of the CU is described. The method includes determining a size and/or a position of a filtering window of the filter dependent on one or more characteristics of the CU and/or the template area, or from information data associated with the picture.

Fig. 15

## Description

## Technical Field

The present invention generally relates to the field of encoding/decoding pictures, images or videos, and embodiments of the present invention concern improvements regarding the Intra prediction, more specifically, improvements regarding a decoder-side intra mode derivation, DIMD, process. More specific embodiments of the present invention relate to a DIMD edge detection adjustment.

## Background

The encoding and decoding of a picture, an image or a video is performed in accordance with a certain standard, for example, in accordance with the advanced video coding, AVC standard (see reference [1]), the high efficiency video coding, HEVC, standard (see reference [2]) or the versatile video coding, VVC, standard (see reference [3]).

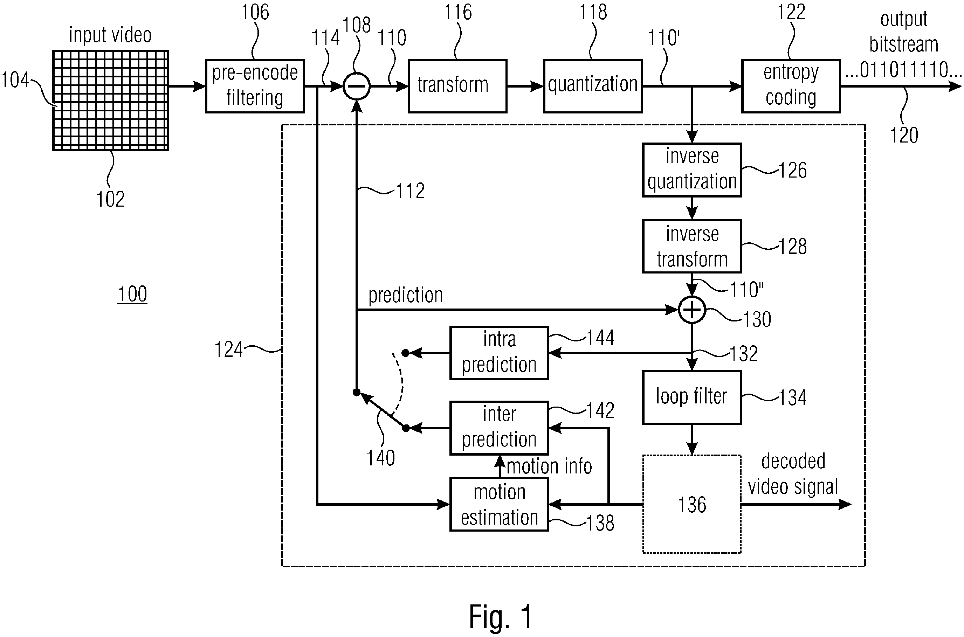

A block diagram of a standard video compression system 100 operating in accordance with the VVC standard is illustrated in Fig. 1. The standard video coder 100 compresses and encodes a picture 102 of a video sequence. The picture 102 to be encoded is partitioned into blocks 104 also referred to as coding units, CUs. The encoder 100 comprises a pre-encode filter 106 and a prediction residual signal former 108 which generates a prediction residual signal 110 so as to measure a deviation of a prediction signal 112 from the signal 114 output by the filter 106. The encoder further comprises a transformer 116, a quantizer 118 and provides an output bitstream or data stream 120 using an entropy coder 122. Further, the encoder 100 comprises a prediction stage 124 for determining the prediction signal 112, which includes a de-quantizer or inverse quantizer 126, an inverse transformer 128, a combiner 130, an in-loop filter 134, a motion estimator 138, an intra/inter mode selector 140, an inter predictor 142 and an intra predictor 144.

The video coder 100 as described with reference to Fig. 1 compresses and encodes a picture 102 of a video sequence as follows. The picture 102 to be encoded is partitioned into the blocks or CUs 104. Each coding unit 104 is encoded using either an intra or inter coding mode. When a CU is encoded in the intra mode, intra prediction is performed by the intra predictor 144. The intra prediction comprises predicting the current CU 114 being encoded by means of already coded, decoded and reconstructed picture samples located around the current CU, e.g., on the top and on the left of the current CU. The intra prediction is performed in the spatial domain. In an inter mode, motion compensation and motion estimation are performed by the motion estimator 138 which searches, in one or more reference pictures provided by the picture buffer 136 and used to predictively code the current picture, a CU that is a good predictor of a current CU. For example, a good predictor of a current CU is a predictor which is similar to the current CU, i.e., the distortion between the two CUs is low or below a certain threshold. The motion estimation may also account for the rate cost of signaling the predictor to optimize a rate-distortion tradeoff. The output of the motion estimation step is one or more motion vectors and reference indices associated with the current CU. The motion compensation then predicts the current CU by means of the one or more motion vectors and reference pictures indices as determined by the motion estimator 138. Basically, the block or CU contained in the selected reference picture and pointed to by the determined motion vector is used as the prediction block for the current CU. The encoder 100, by means of the selector 140, selects one of the intra coding mode or the inter coding mode to use for encoding the CU and indicates the intra/inter decision, for example, by means of a prediction mode flag. Prediction residuals 110 are then transformed and quantized by blocks 116 and 118, and the quantized transform coefficients as well as the motion vectors and other syntax elements are entropy encoded and written into the output bitstream 120. The encoder 100 may skip the transform stage 116 and apply the quantization directly to the non-transformed residual signal 110 in a so-called transform-skip coding mode. After a block or CU has been encoded, the encoder decodes the CU and reconstructs it so as to obtain the reconstructed signal 132 that may serve as a reference data for predicting future CUs or blocks to encode. The quantized transform coefficients 110' are de-quantized and inverse transformed leading to a decoded prediction CU or block 110", and the decoded prediction residuals and the predicted block are then combined at 130, typically summed, so as to provide the reconstructed block or CU 132. The in-loop filters 134 are applied to the reconstructed picture to reduce compensation artifacts. For example, a deblocking filter, a sample adaptive offset, SAO, filter, and an adaptive loop filter, ALF, may be applied to reduce encoding artifacts. The filtered picture is stored in the buffer 136, also referred to as the decoded picture buffer, DPB, so that it may be used as a reference picture for coding subsequent pictures.

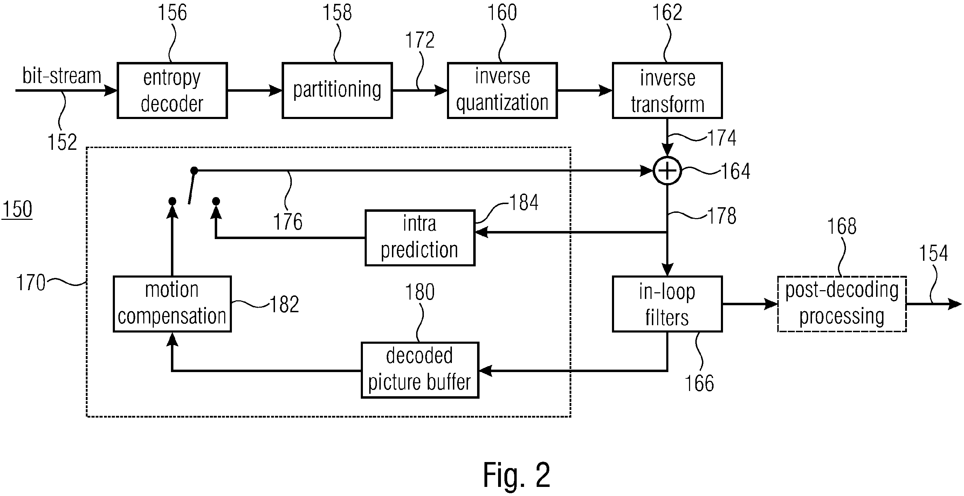

Fig. 2 is a block diagram of a video decoder 150 for predictively decoding from a data stream 152 a picture or video which is provided at an output 154 of the decoder 150. The decoder 150 includes an entropy decoder 156, a partitioning block 158, an inverse quantizer 160, an inverse transformer 162, a combiner 164, an in-loop filter 166, optionally a post-decoding processor 168, and a prediction module 170. The prediction module 170 includes a decoded picture buffer 180 a motion compensator 182 an intra predictor 184.

An encoded picture of a video sequence is decompressed and decoded by the decoder 150 as follows. The input bit stream 152 is entropy decoded by the decoder 156 which provides, for example, the block partitioning information, the coding mode for each coding unit, the transform coefficients contained in each transform block, prediction information, like intra prediction mode, motion vectors, reference picture indices, and other coding information. The block partitioning information indicates how the picture is partitioned and the decoder 150 may divide the input picture into coding tree units, CTUs, typically of a size of 64x64 or 128x128 pixels and divide each CTU into rectangular or square coding units, CUs, according to the decoded partitioning information. The entropy decoded quantized coefficients 172 are dequantized 160 and inverse transformed 162 so as to obtain the decoded residual picture or CU 174. The decoded prediction parameters are used to predict the current block or CU, i.e., whether the predicted block is to be obtained through its intra prediction or through its motion-compensated temporal prediction. The prediction process performed at the decoder side is the same as the one performed at the encoder side. The decoded residual blocks 174 are added to the predicted block 176, thereby yielding the reconstructed current image block 164. The in-loop filters 166 are applied to the reconstructed picture or image which is also stored in the decoded picture buffer 180 to serve with the reference picture for future pictures to decode. As mentioned above, the decoded picture may further go through a post-decoding processing, for example for performing an inverse color transformation, for example a conversion from YCbCr 4:2:0 to RGB 4:4:4.

As mentioned above, the intra prediction mode to be employed for decoding may be carried in the bit stream provided by the encoder and received by the decoder, however, in accordance with other approaches, rather than introducing the actual intra prediction mode into the bit stream, the intra prediction mode may also be derived by using a gradient analysis of reconstructed pixels neighboring a currently processed CU. In other words, the intra prediction mode is not explicitly indicated in the bit stream but is implicit. This approach is referred to as decoder-side intra mode derivation, DIMD, which may be signaled using a simple flag, and the actual intra mode is then derived during the reconstruction process, like the reconstruction process performed by the prediction block 124/170 of the encoder 100 or the decoder 150. The encoder 100 may encode into the bit stream 120 information whether DIMD is used or not for the current CU, and in case DIMD is not used, the actual intra mode is signaled by the encoder and parsed from the bit stream by the decoder.

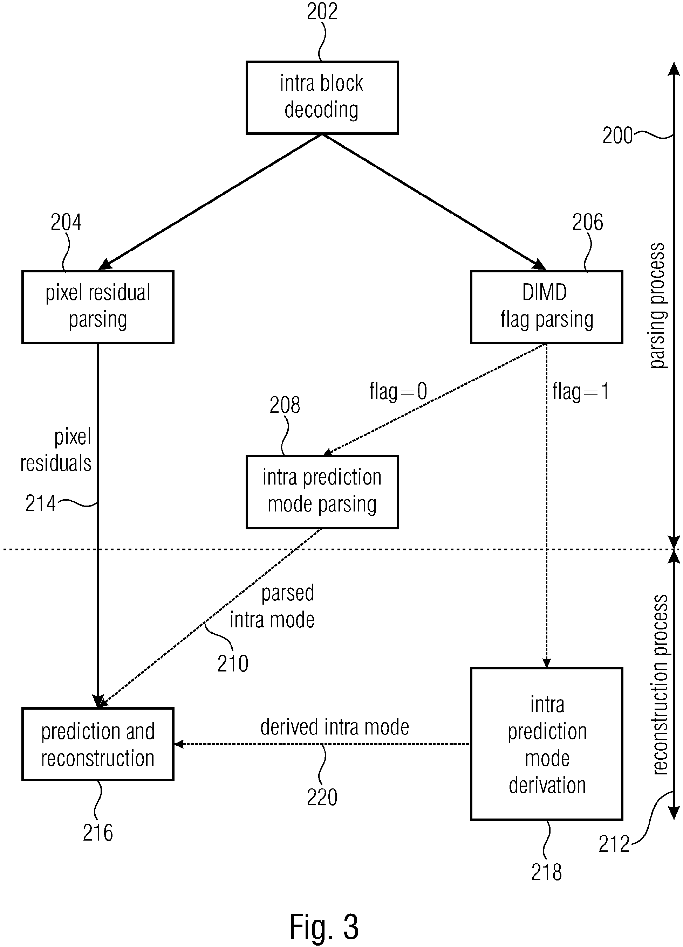

Fig. 3, which is taken from reference [5], illustrates an example of an intra block general reconstruction process as it may be applied at the encoder 100 or at the decoder 150. During a parsing process 200, an intra block decoding is determined, as indicated at block 202, and a pixel residual parsing 204 as well as a DIMD flag parsing 206 is performed. In case the DMID flag 206 is zero, an intra prediction mode parsing 208 is performed so as to obtain the intra mode 210 to be used during the reconstruction process 212 when predicting and reconstructing a pixel, as is indicated at 216. In case the DIMD flag 206 is set to one, the intra prediction derivation 218 is performed during the reconstruction process 212 which yields the derived intra mode 220 which is used, together with the pixel residuals 214 at 216, for the reconstruction process.

Further details of the DIMD approach are described in references [5] to [8]. Conventionally, the DIMD process is based on a reconstructed template area adjacent to a currently processed CU which is three samples wide in width and height. The template area comprises a left area, an above area and an above-left area. These areas are also referred to in the following as a left template area region, an above template area region and an above-left template area region. In the template area respective edge detection filters, like 3x3 horizontal and vertical Sobel filters, are applied in order to determine the amplitude and angle of luminance directions or orientations for each middle line sample of the template area. A Histogram of Gradients, HoG, is computed, and each entry corresponds to a conventional intra angular mode and the cumulated intensities are stored:

$$angle = \arctan(G_{hor}/G_{ver})$$

$$amplitude = |G_{hor}| + |G_{ver}|$$

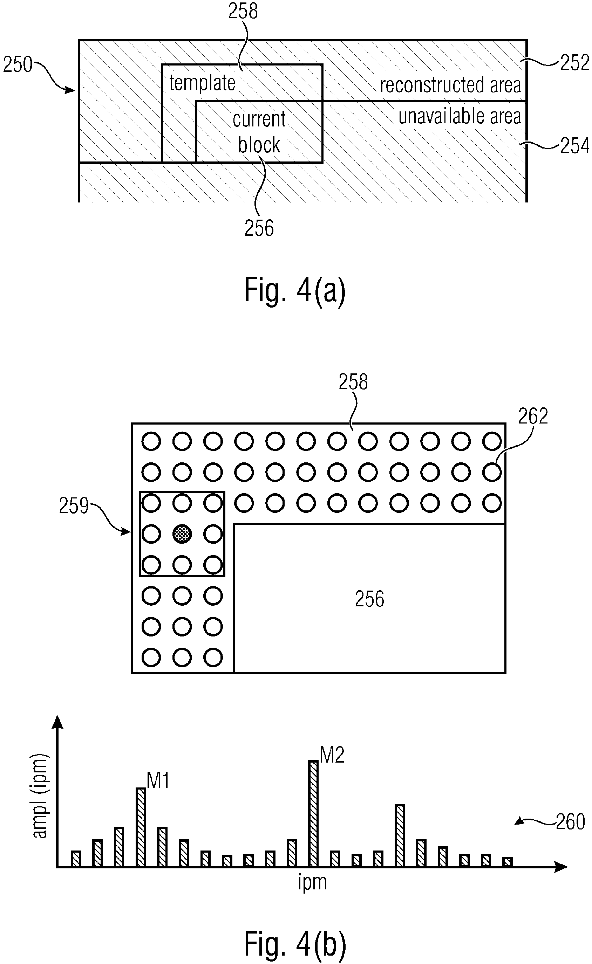

with $G_{hor}$ and $G_{ver}$ being the intensity of pure horizontal and vertical directions as calculated by the Sobel filters. Fig. 4, which is taken from reference [8], illustrates the DIMD template area or zone used for computing the HoG. Fig. 4(a) illustrates a partially reconstructed picture 250 as indicated by the reconstructed area 252 and the unavailable area 254. In other words, a reconstructed area 252 includes already reconstructed coding units or blocks of the picture to be reconstructed, while the respective coding units or blocks in the unavailable area 254 are still to be reconstructed. A currently processed CU or block 256 is illustrated as well as the above mentioned template area 258. Fig. 4(b) illustrates that the template area 258 is 3 samples or pixels wide in width and height, and that a 3x3 horizontal and vertical Sobel filter 259 is used, as described above, to compute the HoG 260 so as to obtain on the basis of the amplitude and angle of luminance directions for each middle line sample 262 of the template area 258 an intra angular prediction mode, also referred to as intra prediction mode, IPM, and for each IPM in the template area an associated cumulated intensity or amplitude. The two most represented IPMs, indicated as $M_1$ and M2 in Fig. 4(b), are selected from the HoG 260 and are combined with a Planar mode using weights for $M_1$ and $M_2$ derived from a ratio of their cumulated amplitudes, and a fixed weight for the Planar mode, for example 1/3, i.e., 21/64 with a 6 bit integer precision.

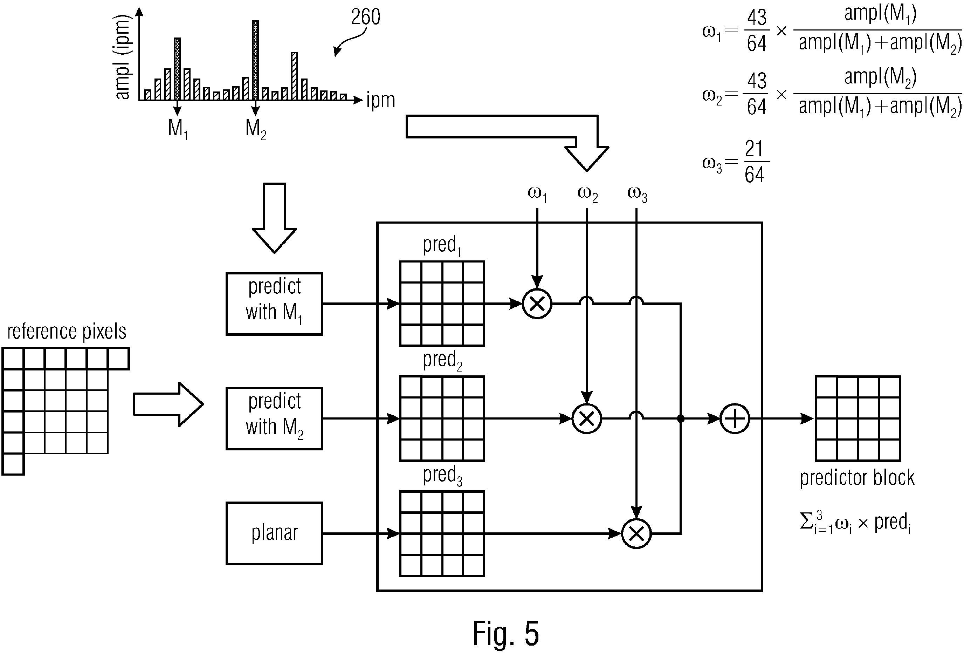

Fig. 5, which is taken from reference [8], illustrates the prediction fusion by weighted averaging of $M_1$, $M_2$ and a Planar mode. Assuming a square shaped CU 256, the respective pixels of the CU 256 are predicted by the two most represented IPMs $M_1$, $M_2$ taken from the HoG 260, thereby obtaining the predictor blocks $Pred_1$, $Pred_2$ and $Pred_3$. The respective predictor blocks are weighted by weights $w_1$ $w_2$, $w_3$, and are fused or combined into the final predictor block including the DMID predictor for the respective samples or pixels in the CU 256.

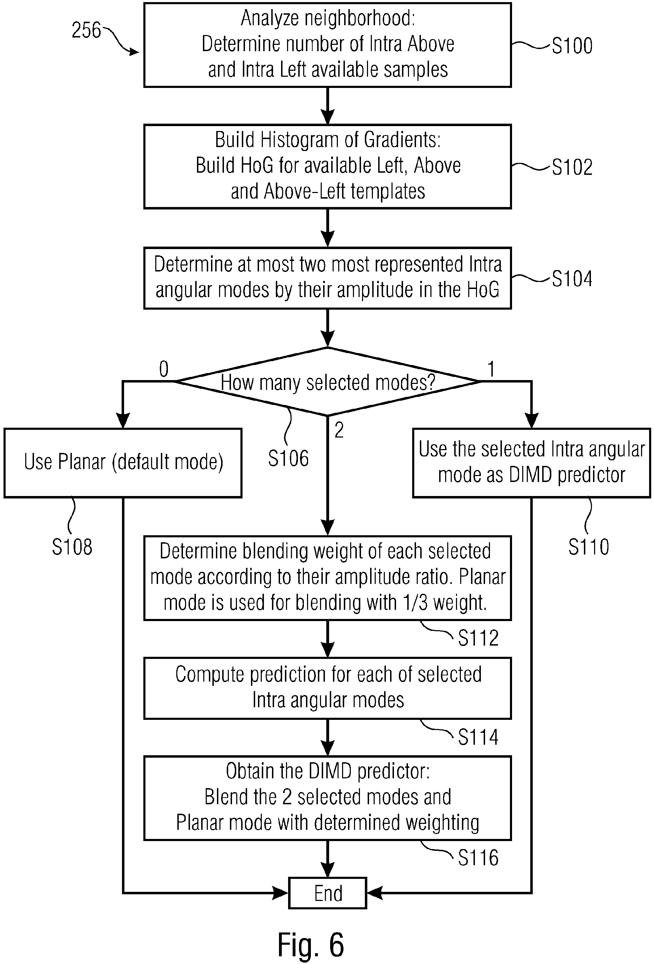

Fig. 6 illustrates an example of a conventional DIMD predictor derivation process. At S100, using an input CU 256, the neighborhood of the input CU 256 is analyzed so as to determine a number of available intra above and intra left samples. At S102, the HoG 260 is built for the template area 258, i.e., on the basis of the available intra samples angular prediction modes, IPMs, are determined (step S104) by their cumulated amplitude in the HoG 260 (step S104). At S106 it is determined how many IPMs are selected, i.e., whether no IPM has been selected, whether one IPM has been selected or whether two IPMs have been selected. In case no IPM has been selected, only the Planar mode, which may be the default mode, is applied, as is indicated at S108, so as to obtain the DIMD predictor. In case only one IPM is selected, the selected IPM is used to obtain the DIMD predictor, as is indicated at S110. In case two IPMs are selected, at S112 the blending weight for each selected mode is determined according to their cumulated amplitude ratio, and the weight for the Planar mode is set to 1/3. At S114 the predictor blocks $Pred_1$, to $Pred_3$ for each selected IPM and the Planar mode are calculated and at S116 the DIMD predictor is obtained by blending the two selected IPMs and the Planar mode using the determined bending weights.

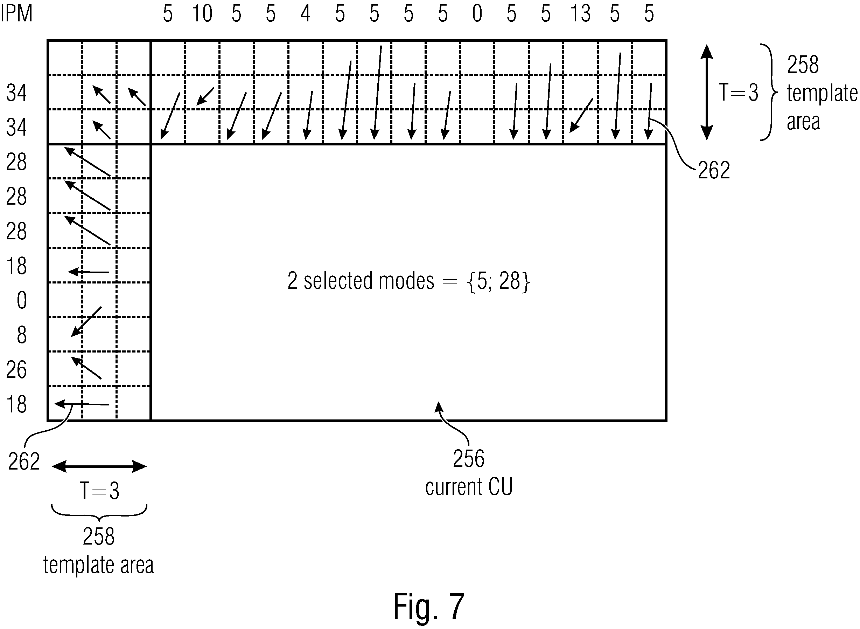

Fig. 7 illustrates an example of a currently processed CU 256 and the associated template area 258 having a width/height of T=3 samples or pixels. For each middle line sample 262 a respective orientation is illustrated by the direction of the respective arrow, and a respective intensity of the gradient is indicated by the length of the arrow. The HoG is generated by cumulating intensities for each orientation/IPM entry, and the two most important modes, in case they exist, in the HoG are selected as modes to be blended with the Planar mode or planar intra prediction mode. In the example of Fig. 7, IPMs 5 and 28 have the first and second highest cumulated intensities/amplitudes. These modes are weighted, as described above, and the blending weights, conventionally, are fixed and/or determined according to the ratio of cumulated intensities/amplitudes of the selected IPMs. Although different blending patterns are proposed in the prior art, all blending patterns are global with regard to the currently processed block or CU. More specifically, when considering conventional approaches and when selecting two IPMs, like $M_1$ and $M_2$, the blending weights may be computed as follows

$$w_1 = \frac{43}{64} \times \frac{ampl(M_1)}{ampl(M_1) + ampl(M_2)}$$

$$w_2 = \frac{43}{64} \times \frac{ampl(M_2)}{ampl(M_1) + ampl(M_2)}$$

$$w_3 = \frac{21}{64}$$

with $w_1$ associated with IPM $M_1$, $w_2$ associated with IPM $M_2$, and $w_3$ associated to the Planar mode. Different modifications of the bending process are described in the prior art, for example, reference [10] suggests selecting multiple blending modes based on a rate distortion optimization, reference [11] suggests deriving implicitly two out of three blending modes using the HoG, reference [13] suggests implicitly deriving blending modes using template matching, and reference [20] suggests different blending modes according to a number of determined DIMD modes. When DIMD is applied, one or two IPMs are derived from the reconstructed neighboring samples, i.e., from the template area, and in case two intra modes are derived, they are combined, i.e., blended, with the Planar mode predictor, conventional solutions always implement a global or CU-level weighted mixing of the two IPMs with Planar mode.

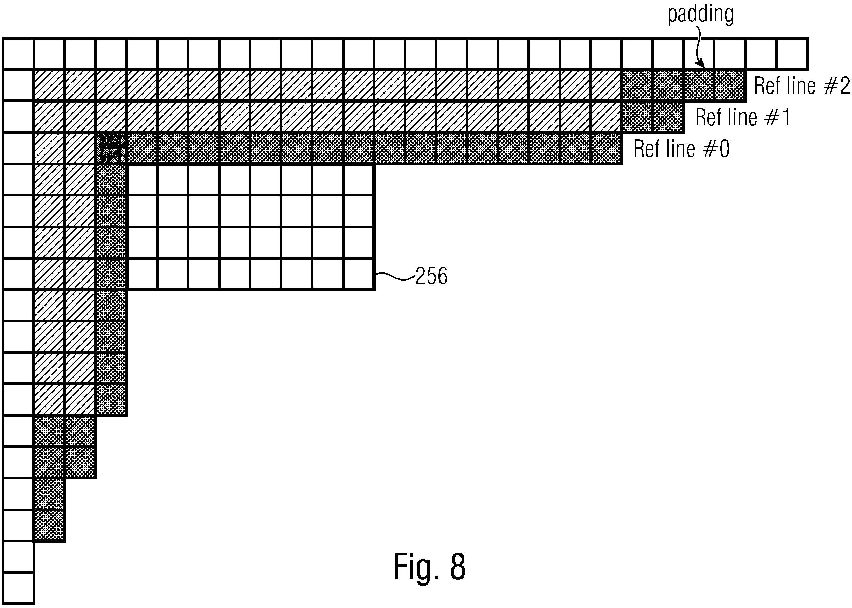

A further coding tool present in H.266/VVC is the so-called multiple reference line, MRL, which is described, for example, in reference [22]. This coding tool uses a plurality of reference lines, like the second or third line to the left and/or above the block or CU to be decoded, instead of using an adjacent reconstructed line being a reference line having a reference line index 0. Fig. 8 illustrates the concept of using multiple reference lines for predicting a CU or target block 256. In the depicted example, three reference lines having reference line indices 0, 1 and 2 are illustrated and the best predicting line index may be signaled using the bitstream. As is illustrated in Fig. 8, a padding process may be applied to the respective reference lines.

Conventionally, in the reconstructed part 252 of the picture 250 three columns and lines of reconstructed samples or pixels are used for the DIMD process, i.e., filters having fixed filtering windows of 3x3 samples and being located at the same position in the template area 258 are used to compute the HoG 260. In reference [6], a 3x3 Sobel filter 259 may be replaced by 3x2 filter when computing a gradient on a pixel located in the left column, top row or top-left sample and directly neighboring the current CU. In reference [8], instead of using a 3x3 Sobel filter 259 on all pixels or samples in the middle line of the template area 258, the 3x3 Sobel filter 259 may be applied more sparsely, e.g., only at one middle line sample in the left template area and at one middle line sample in the above template area. Further aspects of the DIMD process are described, e.g., in

- references [10], [11], [13] and [20] dealing with the blending of the modes,
- references [16] and [18] dealing with behavior correction (bug fixes) with regards to an original intent,
- references [9], [12] and [14] dealing with a combination with other modes,
- references [15], [17], [19] or [21] dealing with syntax or simplifications for the DIMD process.

However, the basic DIMD process described above with reference to Fig. 6 and in reference [8] remained the same.

The above-described prior art approaches for determining the DIMD predictor for respective samples of the currently processed CU are disadvantageous as the filters used for determining the HoG, on the basis of which the IPMs are derived for determining the DIMD predictor, like the Sobel filters, are fixed to a size of 3x3 samples, and are applied systematically only on the middle line samples of the template area, as described above with reference to Fig. 4 which, however, does not allow for an adaption to certain content characteristics as they may be desired for improving the coding efficiency.

Thus, there is a need to provide further improvements for the DIMD process.

**Summary**

The present invention provides a method of determining filter characteristics of a filter for filtering respective samples of a template area adjacent to a coding unit, CU, of a picture so as to obtain from the template area respective Intra Prediction Modes, IPMs, for deriving Decoder-side Intra Mode Derivation, DIMD, predictor for respective samples of the CU, the method comprising: determining a size and/or a position of a filtering window of the filter

- dependent on one or more characteristics of the CU and/or the template area, or
- from information data associated with the picture.

Optionally, for determining a size and/or a position dependent on one or more characteristics of the CU and/or the template area,

- the size of the filtering window is derived from one or more of

   o a number of available samples in the template area,
   o a dimension of the CU,
   o a Multiple Reference Line, MRL, index associated with the template area, and/or

- the position of the filtering window is derived from one or more of

   o a number of available samples in the template area,
   o dimension of the CU,
   o a Multiple Reference Line, MRL, index associated with the template area,
   o a distance metrics to samples at an edge of the CU.

Optionally, for determining a size and/or a position dependent on one or more characteristics of the CU and/or the template area, the template area comprises a plurality of template area regions including an above template area region, a left template area region and an above-left template area region, and the sizes of the filtering window for the respective template area regions are derived according to the available rows of samples in the above template area region, the available columns of samples in the left template area region, and the available columns and rows of samples in the above-left template area region,

   wherein the method comprises, for each template area region, selecting, from a plurality of predefined filters having filtering windows of different sizes, the filter with a filtering window having a size that corresponds to the available columns and/or rows of samples in the respective template area region, and
   wherein, optionally, for an area in which a filtering window overlaps adjacent template area regions the filter is selected according to

- the template area region a center sample of the filtering window belongs to, or
- the template area region having the lowest or highest number of samples contained in the filtering window.

Optionally,

   for determining a size and/or a position dependent on one or more characteristics of the CU and/or the template area, when the CU is greater than a certain size, the samples in a template area are filtered by a first filter having a first filtering window size, otherwise, the samples in a template area are filtered by a second filter having a second filtering window size which is different from the first filtering window size, and/or
   for determining a size and/or a position dependent on one or more characteristics of the CU and/or the template area, the template area comprises a plurality of template area regions including an above template area region, a left template area region and an above-left template area region, and, in case the samples available in the template area regions allow using a plurality of filters having different filtering window sizes,

- when the CU is of square shape, the samples in all template area regions are filtered by the same filter, wherein, optionally, the filter is a filter from the plurality of filters having a maximum or a minimum filtering window size,
- when the CU is of rectangular shape, the samples in a template area region adjacent to the longer side of the CU are filtered by a first filter, and the samples in a template area region adjacent to the shorter side of the CU are filtered by a second filter, the first and second filters having different filtering window sizes, and wherein for filtering the samples in the above-left template area region
  o one of the first and second filters is selected according to an availability of samples in the above-left template area region, or

  always one of the first filter and the second filter is used.

Optionally, for determining a size and/or a position dependent on one or more characteristics of the CU and/or the template area, the template area comprises a plurality of template area regions including an above template area region, a left template area region and an above-left template area region, and the size of the filtering window for the respective template area regions is derived according to the MRL index, like the **intra_luma_ref_idx**, associated with the respective template area region, wherein

- when the MRL index is zero or when no MRL index is indicated, a first filter having a first filter window size is selected for the template area region,
- when the MRL index is different from zero, e.g., has a certain value or a value exceeding a predefined threshold, a second filter having a second filter window size is selected for the template area region, the second filter window being larger than the first filter window size.

Optionally, for determining a size and/or a position dependent on one or more characteristics of the CU and/or the template area, the template area comprises a plurality of template area regions including an above template area region, a left template area region and an above-left template area region, and a filter having a fixed filtering window size is used for the respective template area regions,

  wherein, in case the available rows/columns of samples in a template area region exceed the rows/columns of samples covered by the fixed filtering window size, a position of a central sample of the filtering window is selected so that the filtering window is not adjacent to the CU, whereby an edge of the CU and a boundary of the filtering window are offset by a predefined number of samples,
  wherein, optionally, in case the available rows/columns of samples in a template area region is equal to the rows/columns of samples covered by the fixed filtering window size, the size of the filtering window is reduced so that the rows and/or columns of samples in the template area region are covered by the filtering window.

Optionally,

  for determining a size and/or a position dependent on one or more characteristics of the CU and/or the template area, when the CU is greater than a certain size, the samples in a template area are filtered by the filter located such that the filtering window is offset from an edge of the CU by a first number of samples, otherwise the samples in a template area are filtered by the filter located such that the filtering window is adjacent to the CU or is offset from an edge of the CU by a second number of samples which is different from the first number of samples, and/or for determining a size and/or a position dependent on one or more characteristics of the CU and/or the template area, the template area comprises a plurality of template area regions including an above template area region, a left template area region and an above-left template area region, and a filter having a fixed filtering window size is used for the respective template area regions, wherein,

- when the CU is of square shape, the filtering window is

  o not adjacent to the CU such that an edge of the CU and a boundary of the filtering window are offset by a predefined number of samples, or
  o adjacent to the CU such that an edge of the CU and a boundary of the filtering window are not offset,

- when the CU is of rectangular shape,

  o in a template area region adjacent to the longer side of the CU the filtering window is not adjacent to the CU such that an edge of the CU and a boundary of the filtering window are offset by a predefined number of samples, and in a template area region adjacent to the shorter side of the CU the filtering window is adjacent to the CU such that an edge of the CU and a boundary of the filtering window are not offset, or

o in a template area region adjacent to the shorter side of the CU the filtering window is not adjacent to the CU such that an edge of the CU and a boundary of the filtering window are offset by a predefined number of samples, and in a template area region adjacent to the longer side of the CU the filtering window is adjacent to the CU such that an edge of the CU and a boundary of the filtering window are not offset, and

wherein, optionally, the offset is computed as a function of a ratio between a width and a height of the CU.

Optionally, for determining a size and/or a position dependent on one or more characteristics of the CU and/or the template area, the template area comprises a plurality of template area regions including an above template area region, a left template area region and an above-left template area region, and a filter having a fixed filtering window size is used for the respective template area regions,
wherein the position of the filtering window for the respective template area regions is derived according to the MRL index, like the **intra_luma_ref_idx**, associated with the respective template area region,
wherein

-    when the MRL index is zero or when no MRL index is indicated, the filtering window is adjacent to the CU such that an edge of the CU and a boundary of the filtering window are not offset,
-    when the MRL index is different from zero, e.g., has a certain value or a value exceeding a predefined threshold, the filtering window is not adjacent to the CU such that an edge of the CU and a boundary of the filtering window are offset by a predefined number of samples,

Optionally, for determining a size and/or a position dependent on one or more characteristics of the CU and/or the template area, the template area comprises a plurality of template area regions including an above template area region, a left template area region and an above-left template area region, and a filter having a fixed filtering window size is used for the respective template area regions,

wherein the position of the filtering window for the above and left template area regions is derived by comparing, for different offsets between an edge of the CU and a boundary of the filtering window, one or more or all samples contained in the filtering window using a distance metrics, like the Sum of Absolute Differences, SAD, to samples projected at an edge of the CU, and by selecting the offset yielding a minimum distance,

wherein, optionally, the offset selection is performed for an entire template area region or for each center sample of the filtering window,

wherein, optionally, the position of the filtering window for the above-left template area region is derived as follows:

-    following the determination of the filtering window positions in the above and left template area regions, determining the center sample of the filtering window of the above-left template area region as the intersection of the row of the center sample of a filtering window of the above template area region and the column of the center sample of a filtering window of the left template area region, or
-    for different positions of the filtering window in the above-left template area region, comparing one or more or all samples contained in the filtering window with a distance metrics, like the Sum of Absolute Differences, SAD, to a plurality of samples located in the above-left corner of the CU, and by selecting the position yielding a minimum distance.

Optionally, when implementing the inventive approach at a decoder and when determining the position or offset of the filtering window using a distance metrics, an extra signaling of the distance or offset is required, e.g., using information data associated with the picture, as the decoder ignores samples at an edge or inside of the CU which is not yet reconstructed.
Optionally, when determining a size and/or a position from information data associated with the picture, the information data associated with the picture signals the filter size and/or the filter position using a high-level syntax structure, such as Picture Parameter Set, a Sequence Parameter Set, or a Picture Header, and wherein, optionally, the high-level syntax structure comprises

-    a syntax element, like **sps_dimd_filter_size**, indicating which filter and/or which filter size to be used during the DIMD process, and/or
-    an index, like **dimd_filter_shift_minus1**, indicating a position or a position shift, relative to an edge of the CU in an orthogonal direction, of a center sample of the filtering window.

The present invention provides a non-transitory computer-readable storage medium comprising instructions which, when executed by a computer, cause the computer to carry out the inventive method.
The present invention provides an apparatus for decoding an encoded data stream, the encoded data stream including data representing a picture, the apparatus comprising:

a first module configured to decode from the encoded data stream the picture or the picture and information data associated with the picture, and
a second module configured to derive a Decoder-side Intra Mode Derivation, DIMD, predictor for respective samples of a coding unit, CU, of the picture, the second module comprising:

> a first submodule configured to determine a size and/or a position of a filtering window of the filter
>
> - dependent on one or more characteristics of the CU and/or the template area, or
> - from the information data associated with the picture, and
>
> a second submodule configured to filter respective samples of a template area adjacent to the CU so as to obtain from the template area respective Intra Prediction Modes, IPMs, for deriving the DIMD predictor.

The present invention provides an apparatus for encoding a picture into an encoded data stream, the encoded data stream including data representing the picture, the apparatus comprising:

> a first module configured to receive the original picture and to encode the picture into the data stream, and
> a second module configured to derive a Decoder-side Intra Mode Derivation, DIMD, predictor for respective samples of a coding unit, CU, of the picture, the second module comprising:
>
>> a first submodule configured to determine a size and/or a position of a filtering window of the filter dependent on one or more characteristics of the CU and/or the template area, and
>> a second submodule configured to filter respective samples of a template area adjacent to the CU so as to obtain from the template area respective Intra Prediction Modes, IPMs, for deriving the DIMD predictor.

Optionally, the first module is configured to encode information data associated with the picture into the data stream, the information data signaling the size and/or the position of the filtering window of the filter for the DMID process.

The present invention provides a data stream having encoded thereinto a picture and information data associated with the picture into the data stream, wherein the information data signals the size and/or the position of a filtering window of a filter for a DMID process.

The technical solutions provided according to embodiments of the present invention have the following beneficial effects.

In prior art approaches, the filters used for determining the HoG, on the basis of which the IPMs are derived for determining the DIMD predictor, like the Sobel filters, are fixed to a size of $3 \times 3$ samples, and are applied systematically only on the middle line samples of the template area, which, however, does not allow for an adaption to certain content characteristics as they may be desired for improving the coding efficiency. The present invention addresses the problems associated with the prior art and is based on the finding that introducing more flexibility with regard to the filter size/position, i.e., introducing more flexibility on the selection of the reconstructed samples used as reference samples in the angular, Planar and DC prediction modes, improves compression gains especially in cases where sample values are more representative of the signal direction and in case such samples are not located directed adjacent to the block or CU which is currently processed during the coding or decoding process.

It is to be understood that the content described in this section is not intended to identify key or critical features of the embodiment of the present invention, nor is it intended to limit the scope of the present invention. Other features of the present invention become readily apparent from the following description.

### Brief Description of the Drawings

The drawings are explanatory and serve to explain the present invention, and are not to be construed to limit the present invention to the illustrated embodiments.

Fig. 1      is a block diagram of a conventional video encoder;

Fig. 2      is a block diagram of a conventional video decoder;

Fig. 3      illustrates an example of an intra block general reconstruction process as it may be applied at the encoder of Fig. 1 or at the decoder of Fig. 2;

Fig. 4      illustrates a DIMD template area or zone used for computing a Histogram of Gradients, HoG, in the DIMD process;

Fig. 5      illustrates the prediction fusion by weighted averaging of selected IPMs and a Planar mode;

Fig. 6      illustrates an example of a conventional DIMD predictor derivation process;

Fig. 7      illustrates an example of a currently processed and an associated template area having a width/height of samples or pixels;

Fig. 8      illustrates the concept of using multiple reference lines for predicting a CU or target block;

Fig. 9      illustrates a flow diagram of a method in accordance with embodiments of the present inventions for determining filter characteristics of a filter for filtering respective samples of a template adjacent to a coding unit of a picture;

Fig. 10     illustrates a conventional 5x5 Sobel horizontal or vertical filter;

Fig. 11  illustrates a conventional 5x5 Prewitt horizontal or vertical filter;

Fig. 12  illustrates a conventional 5x5 Kirsch horizontal or vertical filter;

Fig. 13  illustrates a conventional Gaussian blur filter;

Fig. 14  illustrates a currently processed CU and a template area;

Fig. 15  illustrate embodiments where the template area includes 5x5 samples only in one of the template area regions;

Fig. 16  illustrates a flow diagram for a filter size selection by availability of sample in the template area in accordance with embodiments of the first aspect of the present invention;

Fig. 17  illustrates embodiments for the derivation of the filter size on the basis of the dimension or shape of the currently used CU;

Fig. 18  illustrates a flow diagram of the filter size selection dependent on a shape or size of the currently processed CU in accordance with an embodiment of the first aspect of the present invention;

Fig. 19  illustrates a flow diagram of the filter size selection by the MRL index status in each template area region in accordance with embodiments of the first aspect of the present invention;

Fig. 20  illustrates the use of so-called non-adjacent filtering windows in accordance with embodiments of the second aspect of the present invention;

Fig. 21  illustrates in the HoG filtering window placed not adjacent to a current CU based on the MRL index in accordance with embodiments of the second aspect of the present invention;

Fig. 22  illustrates a flow diagram for a filtering window position determination according to the MRL index associated with respective template area regions in accordance with embodiments of the second aspect of the present invention;

Fig. 23  illustrates embodiments for selecting the filter position in case a CU has a rectangular shape;

Fig. 24  illustrates a flow diagram for the determination of the shifting offset (in the orthogonal direction) to the edges of the CU to be applied to the filtering window in accordance with embodiments of the second aspect of the present invention;

Fig. 25  illustrates candidate filtering window positions for having all or a proper subset of the samples covered by the window compared to projected edge samples of a current CU;

Fig. 26  illustrates an embodiment where edge samples of a CU for the SAD process are indicated by the direction of gradient computed in a filtering window;

Fig. 27  illustrates a flow diagram for determining the position shifting offset for each template area region in accordance with embodiments of the second aspect of the present invention;

Fig. 28  illustrates a number of top-left samples of a CU 256 which are compared to respective subsets of samples of a filtering window in a top-left template area region;

Fig. 29  illustrates embodiments of the third aspect of the present invention;

Fig. 30  illustrates a block diagram of a decoder in accordance with embodiments of the present invention;

Fig. 31  illustrates a block diagram of an encoder in accordance with embodiments of the present invention;

Fig. 32  illustrates a data stream in accordance with embodiments of the present invention; and

Fig. 33  illustrates a block diagram illustrating an electronic device 900 according to embodiments of the present invention;

**Detailed Description**

Illustrative embodiments of the present invention are described below with reference to the drawings, where various details of the embodiments of the present invention are included to facilitate understanding and should be considered as illustrative only. Accordingly, those of ordinary skill in the art will recognize that various changes and modifications of the embodiments described herein can be made without departing from the scope of the present invention. Also, descriptions of well-known functions and constructions are omitted from the following description for clarity and conciseness.

In the present invention, the term "and/or" is intended to cover all possible combinations and sub-combinations of the listed elements, including any one of the listed elements alone, any sub-combination, or all of the elements, and without necessarily excluding additional elements.

In the present invention, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present invention, the term "coding" refers to "encoding" or to "decoding" as becomes apparent from the context of the described embodiments. Likewise, the term "coder" refers to "an encoder" or to "a decoder".

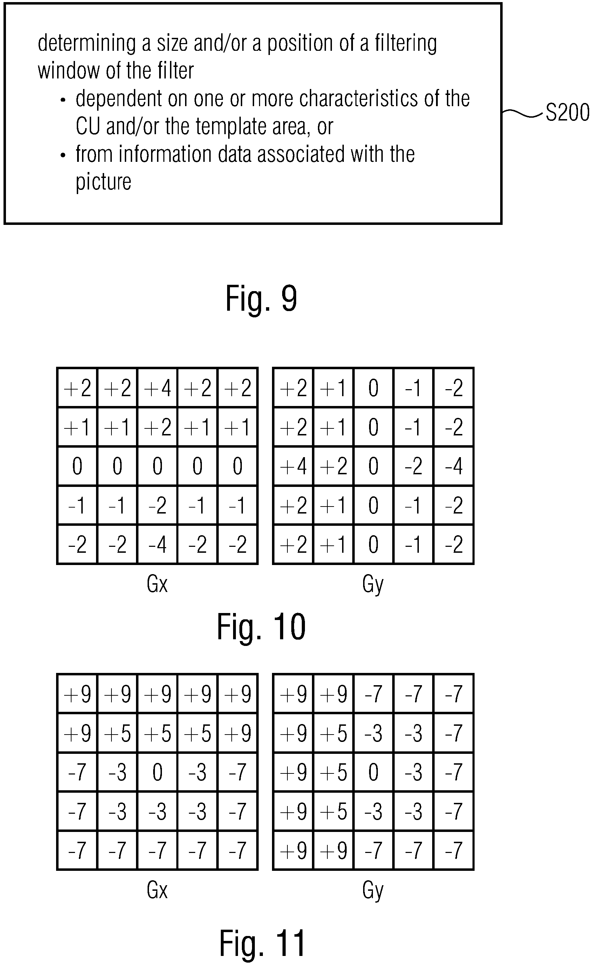

Fig. 9 illustrates a flow diagram of a method in accordance with embodiments of the present inventions for determining filter characteristics of a filter for filtering respective samples of a template adjacent to a coding unit of a picture so as to obtain from the template respective intra prediction modes for deriving decoder-side intra mode derivation predictor for respective samples of the CU. The method includes:

S200: determining a size and/or a position of a filtering window of the filter

- dependent on one or more characteristics of the CU and/or the template area, or
- from information data associated with the picture.

In other words, embodiments of the present invention, rather than using filters having a fixed size/position, allow determining the filter size/position of a filter, which is used for obtaining one or more IPMs for deriving DIMD predictor for CU samples, dependent on one or more characteristics of the CU/template. In other embodiments, the information concerning the filter size/position to be employed during the DIMD process may be obtained from additional data associated with a picture and generated at the encoder so as to be used for the DIMD process at the encoder. Further, the information data or additional data may be included into the bitstream also carrying the encoded data representing the picture to be decoded so that a decoder may derive the size/position from the received bitstream. Embodiments of the present invention improve the DIMD IPM determination by proposing a set of filters having different sizes and/or by adjusting the center of the filter to different samples, i.e., other than prior art approaches which only uses filters having a single size and a fixed position, the inventive approach allows adapting the size/position of the filter dependent on respective characteristics of the CU and/or the template area, i.e., the adaptions may be guided or conditioned by the currently processed CU and/or by the reconstructed neighborhood, the template area to which the CU is adjacent. The inventive approach is advantageous as the orientations and intensities used to compute the HoG and to select the DIMD IPMs are more representative of the signal/sample to be predicted which results in an improved compression efficiency. Further, embodiments of the present invention may be implemented with a limited additional complexity.

In the following description of embodiments of the present invention it is noted that the terms filter and convolutional kernel or kernel are used interchangeably.

It is noted that the present invention is not limited to determining the IPM statistics, on the basis of which the one or more IPMs are selected, on the basis of a HoG. In accordance with other embodiments, other approaches may be applied for determining the IPM statistics, e.g., a Hough transform or a gradient-based Hough transform may be used on a filtering window size in order to determine directions for each center pixel (of the filtering window) and then a histogram of found directions may allow selecting the peak direction (and the matching IPM).

1st Aspect: Filters Having Different Sizes

In accordance with a first aspect of the present invention, filters having different filter sizes may be used to generate the HoG instead of using only 3x3 filters, like 3x3 Sobel filters. The filters having the different filter sizes may be included in a list containing at least two filters with different filter sizes and among these available filters, a filter having a suitable size may be selected. In accordance with the first aspect of the present invention, only the filter size used to generate the HoG is modified during the DIMD process, otherwise, the DIMD process may be conventional, for example, as described with reference to Fig. 6 above.

For example, dependent on the number of samples/pixels available in the template area, a filter having a suitable filtering window size may be selected. For example, in case at least five pixels are available in the template area, a filter having a 5x5 filtering window size may be employed. For example, one or more of the following filters may be used:

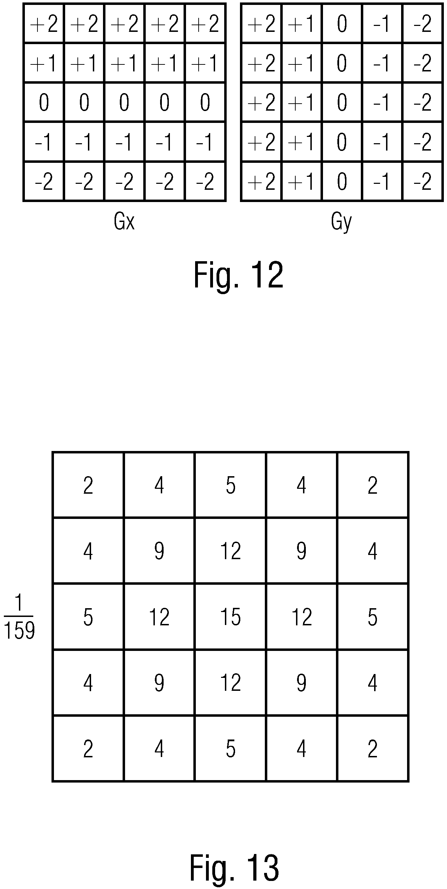

- a 5x5 Sobel horizontal or vertical filter as illustrated in Fig. 10,
- a 5x5 Canny filter,
- a 5x5 Prewitt filter as illustrated in Fig. 11,
- a 5x5 Kirsch filter as illustrated in Fig. 12,
- a Gaussian blur filter as illustrated in Fig. 13 that may be applied before filtering for obtaining the HoG or/and
- any other edge detection convolution filter or kernel.

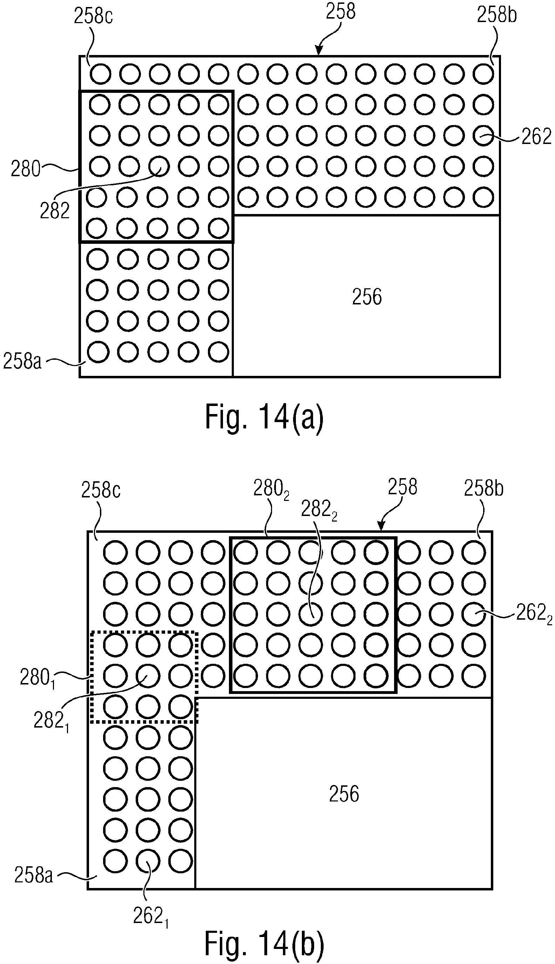

Fig. 14 illustrates a currently processed CU 256 and the template area 258. The template area 258 includes five samples/pixels, i.e. is five samples wide in the horizontal direction and five samples high in the vertical direction. In other words, 5x5 samples are available everywhere in the template area 258 so that a filter having a 5x5 convolution kernel or filtering window 280 may be employed. In the template area 258 the samples used for the filtering are represented by respective circles, and the filtering window 280 is centered on the middle line samples 262 of the template area 258. In Fig. 14 sample 282 is the current center sample of the filtering window 280.

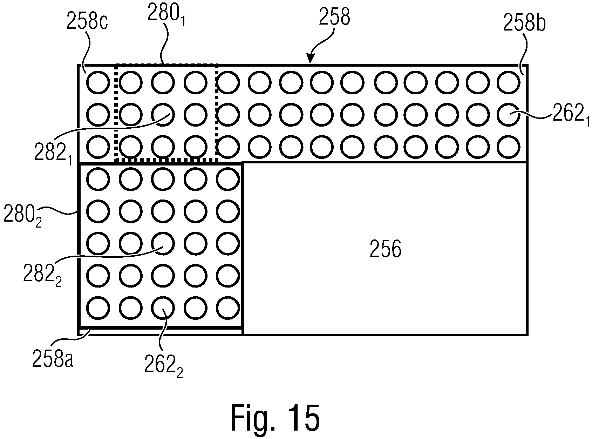

Fig. 15(a) and Fig. 15(b) illustrate embodiments in accordance with which the template area 258 includes 5x5 samples only in one of the template area regions. In Fig. 15(a) the template area 258 includes 5x5 samples only in the template area region above the CU 256, namely in the above and above-left template area regions while in the left template area region only 3x3 samples are available. In accordance with such embodiments, according to the present invention, different filters having different filtering window sizes are employed. In the embodiment of Fig. 15(a), a filter having a 3x3 filtering window $280_1$ is employed for processing the left template area region 258a, while a filter having a 5x5 filtering window $280_2$ is employed in the above template area region 258b. The filtering windows $280_1$ and $280_2$ are centered on the respective middle line samples $262_1$ and $262_2$ of the respective template area regions. For the filtering win-

dows $280_1$ and 2802, further, the respective center samples $282_1$ and 2822 are illustrated. In accordance with embodiments, the above-left template area region 258c may be processed by one of the filters.

Fig. 15(b) illustrates an embodiment similar to the one of Fig. 15(a) except that the 5x5 samples are now in the left template area region 258a while the 3x3 samples are in the above and above-left template area regions 258b and 258c. The filter having the 3x3 filtering window $280_1$ is now applied to the above template area region 258b and the filter having the 5x5 filtering window $280_2$ is now applied to the left template area region 258a. The above-left template area region 258c may be processed by one of the filters.

*Filter size derivation using template samples availability*

In accordance with embodiments, the filter size to be applied may be derived automatically according to a number of available samples in the template area 258, i.e. the available rows of samples for the above template area region 258b, the available columns for the left template area region 258a and the available column and rows for the above-left template region 258c. Thus, as described above with reference to Fig. 14 and Fig. 15, the template area 258 may be split into the three mentioned area regions, namely above, left and above-left. The areas may be split by extending the edges of the currently processed CU 256 into the template area 258, and for each template area region a corresponding decision regarding the filter size may be performed depending on the samples' availability in each template area region.

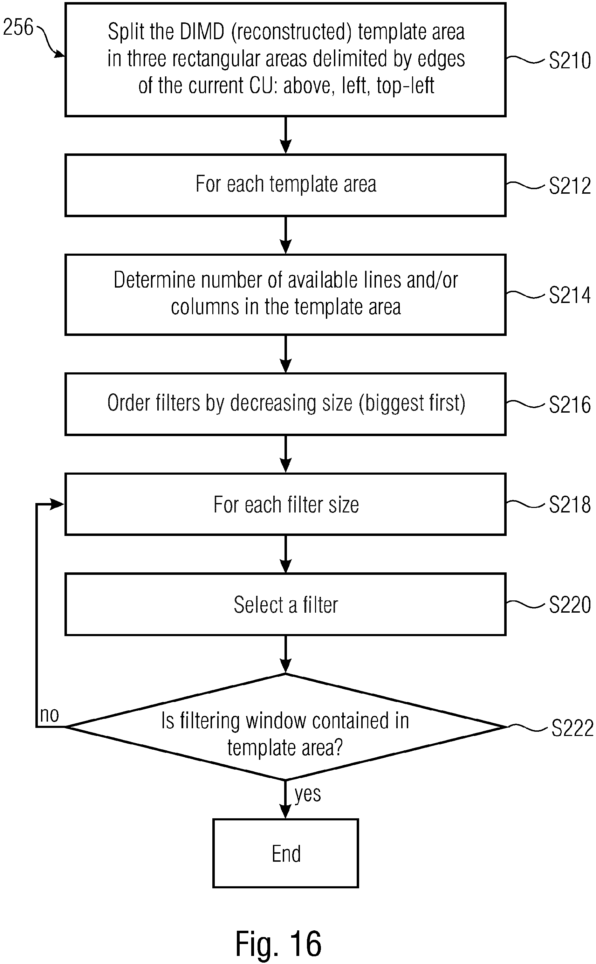

Fig. 16 illustrates a flow diagram for a filter size selection by availability of sample in the template area in accordance with embodiments of the first aspect of the present invention. At S210, the DIMD template area and the reconstructed area 252 (see Fig. 4) is split into the three template area regions that are delimited by the edges of the currently processed CU 256, namely into the left template area region 258a, the above template area region 258b and the above-left template area region 258c. As is indicated at S212, the subsequent steps are performed for each template area region, and at S214, for a currently processed template area region, the number of available lines and/or columns in the template area region is determined. At S216 the available filters are ordered by size, for example by decreasing size so that the filter having the largest size is first in the list. As is indicated at S218, the following steps are carried out for each filter. At step S220, a filter is selected from the ordered list of filters and it is determined at S222 whether the filtering window of the selected filter is in the template area region. In the described embodiment, the list is ordered such that the filters having the largest filtering window sizes are tested first so that by repeating S218 to S222, eventually, a filter is found having a filtering window that is contained fully in the template area region. In case such a filter is found, the process ends and the found filter is used for the DIMD process.

As described above with reference to Fig. 15(a) and Fig. 15(b), the above-left template area region 258c may not be of square shape, i.e. the number of available rows and columns of samples is different. As is illustrated, for example in Fig. 14(a) and in Fig. 14(b), the above-left template area region corresponds to a 5x5 and 3x3 convolution kernel, respectively. In accordance with embodiments, a filter having a filtering window size that exceeds the dimension of the above-left template area region 258c may be selected for processing the samples in this template area region, and the filtering window size may be determined by the template area region the filtering window center sample belongs to or by the template area region having the lowest or highest number of available samples contained in the selected filtering window.

Regarding the above described embodiments of the first aspect of the present invention it is noted that the inventive approach is naturally not limited to the mentioned filters having a 3x3 and 5x5 convolution kernel, rather, other embodiments may use filters having larger or smaller convolution kernels.

*Filter Size Derivation Using the Dimension of the Currently Processed CU*

In accordance with other embodiments, in case there are no samples availability constraints in the template area 258, i.e. for all available convolution kernel sizes each template area region has enough available samples to allow processing them with any of the available convolution kernels. In accordance with embodiments, in such a situation, the decision regarding the filter size may be made according to the size or shape of the currently processed CU 256.

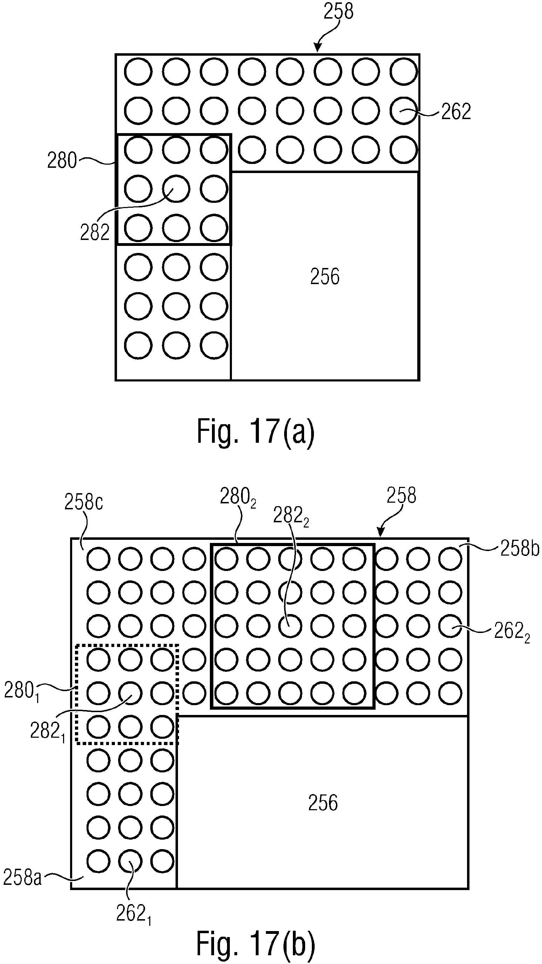

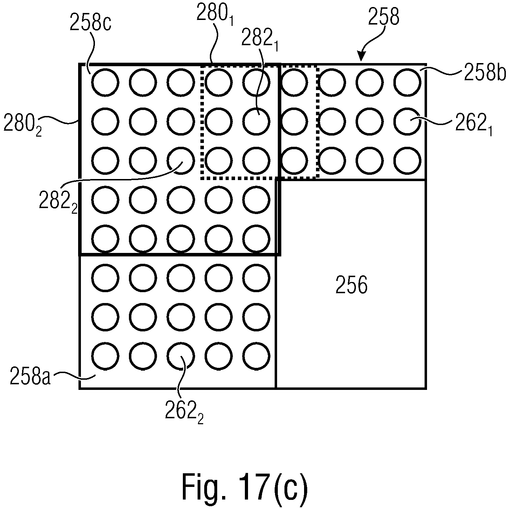

Fig. 17 illustrates embodiments for the derivation of the filter size on the basis of the dimension or shape of the currently used CU 256. In Fig. 17 the currently processed CU 256 is illustrated and the template area 258 to which it is adjacent. It is assumed that the template area 258 has sufficient samples for allowing the processing with any of the available convolution kernels, however, in Fig. 17 only the samples in the template area 258 are illustrated which are processed by the actually selected filter size. In other words, in addition to the samples illustrated by the circles in the template area 258 additional rows and columns of samples are available so that the template area actually extends beyond the area illustrated in the Fig. 17.

Fig. 17(a) illustrates an embodiment in accordance with which the currently processed CU 256 is of square shape and among the available filters a filter having a 3x3 filtering window or convolution kernel 280 is selected as, for example, the minimum filter size which is used for filtering each middle line sample of the template area 258, wherein the respective middle line samples are selected such that the filtering window 280 includes the samples in the row/column of the template area 258 being directly adjacent to the CU 256.

Fig. 17(b) illustrates an embodiment in accordance with which the CU 256 is of rectangular shape with its longer side being adjacent to the above template area region 258b and with its shorter side being adjacent to the left template area region 258a. In accordance with the embodiment depicted in Fig. 17(b), the smaller filter size $280_1$ is used to filter the samples along the shorter side, i.e. in the left template area region 258, while the larger filter size 2802 is used to filter the samples along the longer side, i.e. in the above template area region 258b. In accordance with other embodiments, as illustrated in Fig. 17(c), if the currently processed CU 256 is rectangular, the smaller filter size $280_1$ may be used to filter the samples along the shorter side, i.e. in the above template area region 258b, while the larger filter size 2802 is used to filter the samples along the longer side, i.e. in the left template area region 258a. The top-left template area region 258c may use one of the filters according to the availability of samples in this template area region. In accordance with other embodiment for the above-left template area region 258c always the smaller filter $280_1$ or the larger filter 2802 is used.

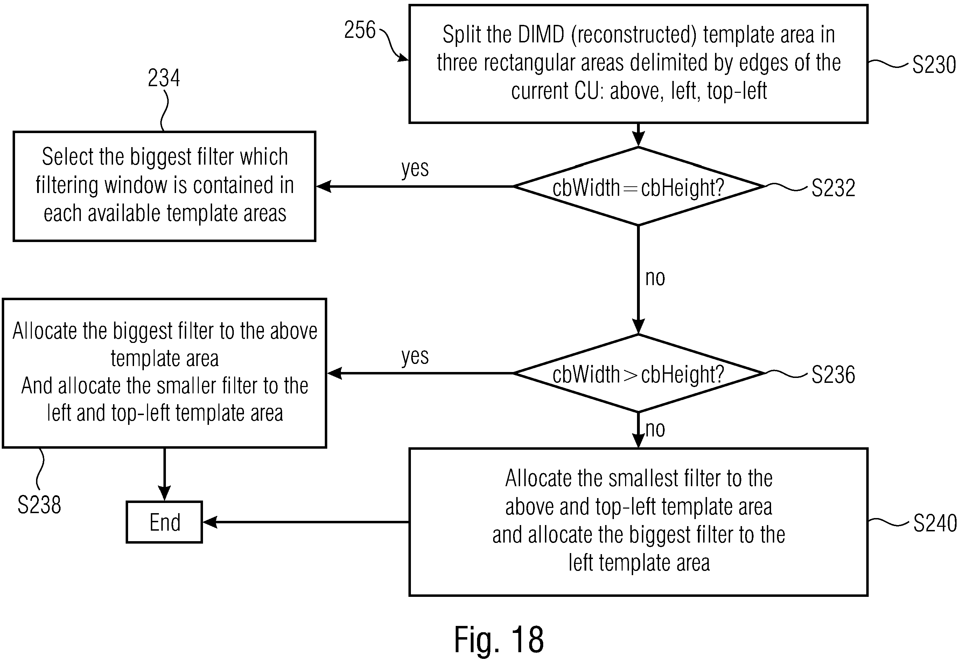

Fig. 18 illustrates a flow diagram of the filter size selection dependent on a shape or size of the currently processed CU in accordance with an embodiment of the first aspect of the present invention. At S230, the reconstructed DIMD template area 258 is split into the already mentioned three template area regions which are delimited by the edges of the currently processed CU 256, namely into the above, left and above-left template area regions 258a to 258c. At S232, it is determined whether the width of the CU 256 and the height of the CU 256 are equal. In case the width and height are equal, the biggest or smallest available filter which filtering window is contained in each of the available template areas is selected at S234 (see Fig. 17(a)). In case the width and height are different, it is determined at S236 whether the width is greater than the height of the CU 256. In case the width is greater than the height, at S238 the largest filter is allocated to the above template area region and a smaller filter is allocated to the left and the above-left template area regions, as illustrated in Fig. 17(b). In case it is determined at S236 that the width is not greater than the height of the CU 256, at S240 the smallest filter is allocated to the above and above-left template area regions and the biggest filter is allocated to the left template area region, as is illustrated in Fig. 17(c).

*Filter Size Derivation Using a Current MRL of Neighboring Blocks*

In accordance with other embodiments of the first aspect of the present invention, the modes of neighboring blocks may be inspected and in case the MRL index, like the *intra_luma_ref_idx* of a template area, like the above, left or above-left template area region is 0, the conventional 3x3 filter may be used. When relying on the MRL tool, in accordance with embodiments, in case no *intra_luma_ref_idx* is received, this is understood or evaluated as an index value of 0, i.e., the MRL index in such embodiments is inferred to 0 and the conventional 3x3 filter is used. However, in case MRL is employed and the MRL index is greater than 0, a filter having a size greater than the conventional size, for example a 5x5 filter, may be employed. In accordance with embodiments, the larger or bigger filter size may be used only in case the MRL index received is greater than a predefined threshold, for example greater than 1.

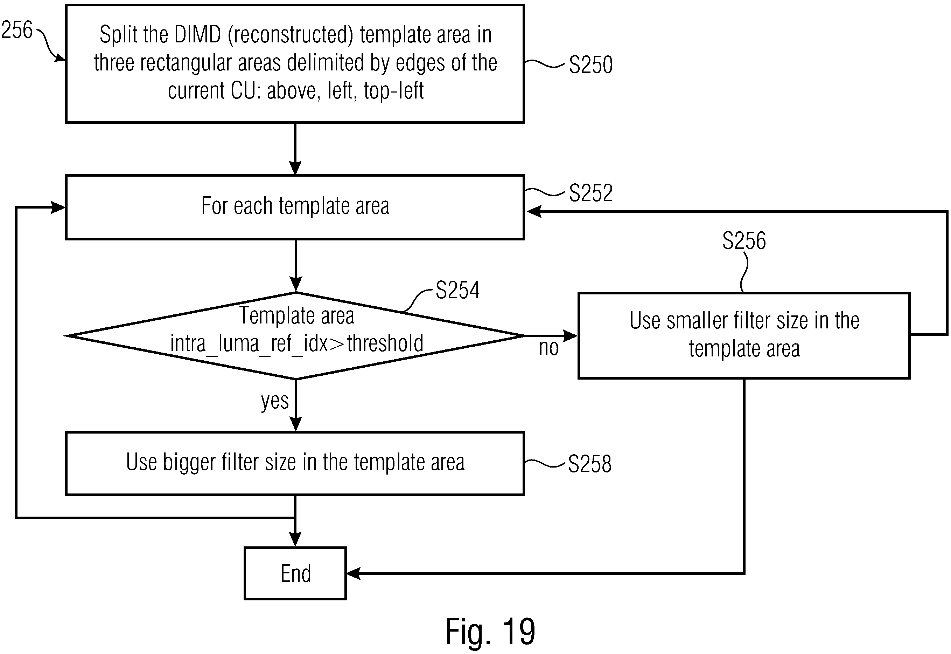

Fig. 19 illustrates a flow diagram of the filter size selection by the MRL index status in each template area region in accordance with embodiments of the first aspect of the present invention. At S250, the reconstructed DIMD template area 258 is split into the three above-described template area regions delimited by the edges of the currently processed CU 256. As is indicated at S252, for each template area region it is determined whether the *intra_luma_ref_idx* is greater than a threshold, as is indicated at S254. In case the index is below the threshold, as is indicated at S256, the smaller filter size is used for the template area region, for example, the conventional or default 3x3 filter size. On the other hand, in case the index is greater than the threshold, for the respective template area region, the larger filter size is used, as is indicated at S258.

*Filter Size Signaling*

In accordance with further embodiments, rather than deriving the filter size as described in the preceding embodiments of the first aspect, the filter size to be employed by the DIMD process at the decoder side may be signaled in a high-level syntax structure such as a picture parameter set, a sequence parameter set, a picture header or the like. For example, if the flag *sps_dimd_enabled_flag* is set to 1, a syntax element *sps_dimd_filter_size* indicates which filter and/or which filter size is to be used during the DIMD process. For example, certain values of the *sps_dimd_filter_size* may signal different filters as follows:

- 0 indicates a 3x3 Sobel filter,
- 1 indicates a 5x5 Sobel filter,
- 2 indicates that both Sobel filters, the 3x3 and the 5x5 Sobel filter may be used,
- ...

In accordance with further embodiments, the respective values or further values may indicate other filters with other sizes such as filters described above with reference to Fig. 11 to Fig. 13. In case the filter size is signaled for a CTU/CU/PU, a rate distortion optimization may be applied to determine which filters provide the best prediction.

2nd Aspect: Filtering Window Central Position Adjustment

In accordance with a second aspect of the present invention, the filter size remains fixed, however, the position of the central sample of the filtering window is selected such that the filtering window is no longer necessarily adjacent to the currently processed CU, which is to be predicted.

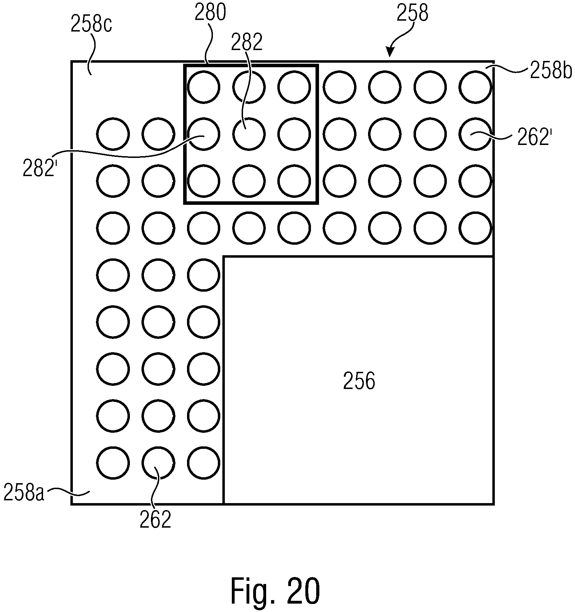

Fig. 20 illustrates the use of so-called non-adjacent filtering windows in accordance with embodiments of the second aspect of the present invention. Fig. 20 illustrates the currently processed CU 256 and the associated template area 258 including, as described above with reference to the first aspect, the left template area region 258a, the above template area region 258b and the above-left template area region 258c. In the respective template area regions, the samples or pixels available for the filtering are illustrated by the circles, and a filter having a filtering window 280 of fixed size is employed. As is illustrated in Fig. 20, in the above template area region 258b, four rows of samples are available while in the left template area region 258a only three columns of template samples are available. Therefore, in the left template area region 258a the filter 280 is placed such that the center sample 282 of the filtering window is on the middle line samples 262, whereas in the above filter area region the center samples 262' for the filtering window 280 are such that the filtering window 280 is no longer adjacent to the CU 256, rather in the depicted embodiment, one row of non-filtered samples is between the filtering window 280 and the CU 256.

The position of the filtering window 280 may be moved if all samples in the filtering window are available. In case the filtering window 280 covers an area where no samples in the template area are available, for example, when placing the center sample 282 of the window 280 to the sample 262', the window 280 only covers six samples but no sample in the right column. In such a situation, the filtering window 280 is not moved, but stays adjacent to the current CU 256. In accordance with other embodiments, in such a situation, if possible, the filter size may be decreased to a lower size of NxN samples or it may be adjusted to cover only the available samples are present in the filtering window, for example, by adjusting the size to a 2x3 filter.

In accordance with embodiments, the position of the center sample 282 of the filtering window 280 may be fixed. For example, it may be established such that a distance between an edge 256x and/or 256y of the currently processed CU 256 and the boundary of the filtering window 280 is set to a predefined value or number, for example, in the embodiment of Fig. 20, this number or value is 1.

*Filter Position Derivation using the MRL Associated with the Template Areas*

As mentioned above, the template area 258 may be split into the above, left and above-left template area regions. Each of the template area regions may be associated with an MRL state which corresponds to the MRL index used to predict the template area region. In case MRL is not used or not indicated or signaled for a respective template area region, an index value of 0 is inferred.

In accordance with embodiments, when the MRL index associated with a certain template area region is 0, the position of the filtering window central sample 282 is selected for the entire template area 258 such that the filtering window 280 is adjacent to the current CU 256, which, when using a conventional filter corresponds to a conventional approach. However, when the MRL index is set to a value different from 0, for example when the MRL index value equals 1 for a template area region, the center sample 282 of the filtering window 280 is offset by one sample vertically for the above template area region 258b, horizontally for the left template area region 258a and horizontally and/or vertically for the above-left template area region 258c. This means that the filtering window 280 is no longer adjacent to the current CU, but is offset from the horizontal edge 256x and/or from the vertical edge 256y of the CU 256 by one or more rows/columns of samples in the respective template area regions.

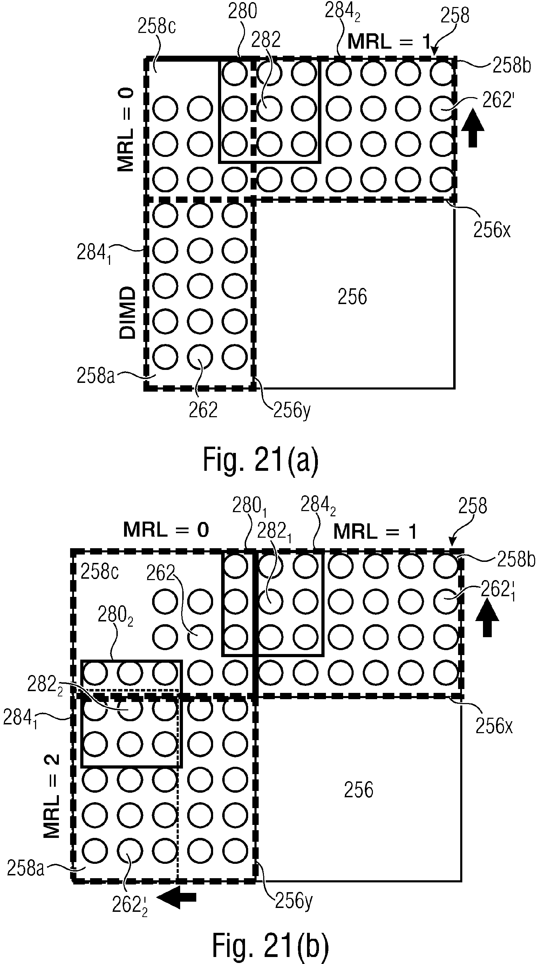

Fig. 21 illustrate the HoG filtering window placed not adjacent to a current CU based on the MRL index in accordance with embodiments of the second aspect of the present invention. Fig. 21(a) illustrates the currently processed CU 256 and the template area 258 including reconstructed samples from already reconstructed CUs, the so-called neighboring CUs $284_1$ and $284_2$ indicated in the figure by the dashed boxes. The left template area region 258a includes samples from the neighboring CU 2841 for which no MRL is employed so that an MRL=0 is inferred and the center samples 282 for the filtering window are selected such that the filtering window 280 is adjacent to the vertical edge 256y of the currently processed CU 256. On the other hand, the above template area region 258b and the above-left template area region 258c include samples from the neighboring CU $284_2$ in which MRL is employed. For the samples of the above-left template area region 258c a MRL=0 is indicated so that the center samples of the filtering window 280 are selected in the above-left template area region 258c such that the boundary of the window 280 is adjacent to the horizontal edge 256x and the vertical edge 256y of the CU 256. For the above template area region 258b, a MRL=1 is signaled or determined, so that the center samples for the filtering window 280 are adjusted in a way as described above with reference to Fig. 20, i.e., the center samples 282 are shifted by one row (row of 262') further away from the horizontal edge 256x of the CU 256 as is indicated by the arrow, thereby providing an offset of one sample row between the window boundary and the edge 256x.

Fig. 21(b) illustrates a further embodiment which is similar to Fig. 21(a), except that neighboring CUs $284_1$ and $284_2$ employ MRL so that for each of the template area regions, an MRL index is signaled. In the above-left template area region 258c, a MRL=0 is signaled, so that the center samples 262 for the 3x3 filtering window are selected such that the filtering sample is adjacent to the horizontal edge 256x and the vertical edge 256y of the CU 256 without an offset. For the above template area region 258b, a MRL=1 is signaled so that the center samples $262'_1$ are shifted by one row away from the horizontal edge 256x of the CU 256 as is indicated by the arrow, in the same way as described above with reference to Fig. 21(a). For the left template area region 258a, a MRL=2 is signaled, so that the center samples $262'_2$ for the filtering window $280_2$ are shifted such that an offset of 2 columns of samples exists between the boundary of the filtering window 2802 and the vertical edge 256y of the current CU.

In accordance with further embodiments, an offset may only be provided in case the MRL index of an associated template area region has a value greater than a certain threshold, for example, only in case the MRL is greater than 1.

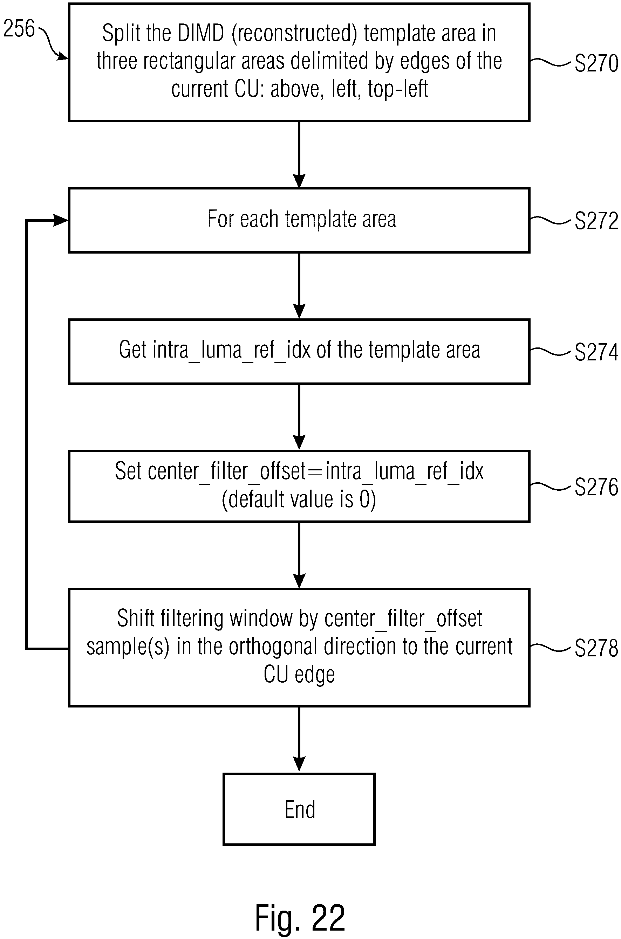

Fig. 22 illustrates a flow diagram for a filtering window position determination according to the MRL index associated with respective template area regions in accordance with embodiments of the second aspect of the present invention. At S270 the reconstructed DIMD template area 258 is split into the respective template area regions which are delimited by the respective edges 256x and 256y of the currently processed CU 256, thereby yielding the above, left and above-left template area regions. At S272, for each template area region the *intra_luma_ref_index* is obtained, as is indicated at S274. A *center_filter_offset* is set to the *intra_luma_ref_index*, as is indicated at S276 with a default value being 0, so that at S278 the filtering window is shifted by the *center_filter_offset* number of samples in an orthogonal direction with regard to an edge of the currently processed CU 256.

*Filter Position Derivation Using the Size/Shape of the Currently Processed CU*

In accordance with other embodiments of the second aspect of the present invention, a position of a center sample of a filtering window may be derived according to the size/shape of the currently processed CU.

In case the CU 256 has a square shape, the filtering window may be placed adjacent to the edges 256x, 256y of the current CU 256 (see Fig. 21(a)). In accordance with other embodiments, in case of a square shape CU 256, the filtering window may be provided such that it is not adjacent to the edges of the current CU 256 but an offset between the edges of the CU 256 and the boundary of the filtering window may be provided, for example, an offset of one sample row or one sample column.

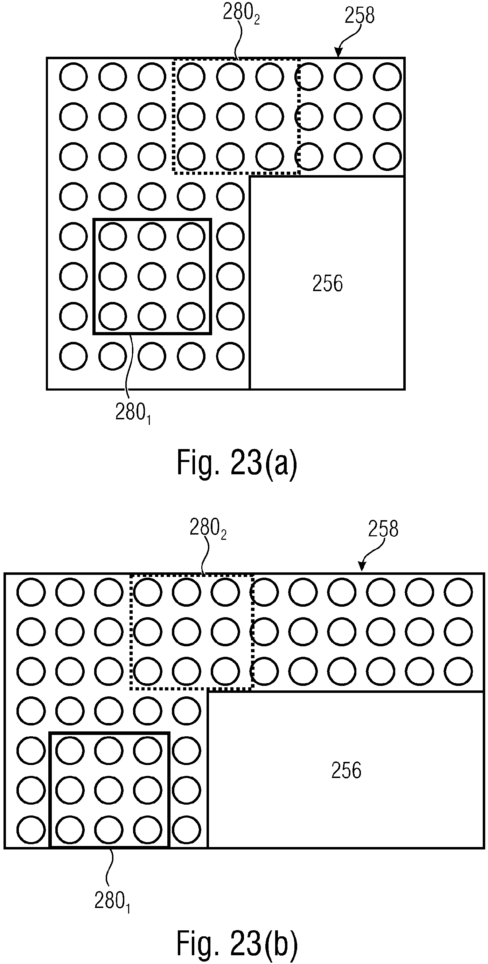

Fig. 23 illustrates embodiments for selecting the filter position in case a CU 256 has a rectangular shape. As is illustrated in Fig. 23(a), the position of the filtering window 280 is offset by one column of samples in the template area adjacent to the longer side of the CU region 256 while the filtering window 280 remains adjacent to the CU 256 in the template area along the shorter side. In accordance with other embodiments, as is illustrated in Fig. 23(b), the filtering window offset may be applied in the template area along the shorter side and the filtering window remains adjacent to the CU in the template area along the longer side of the CU 256.

In accordance with other embodiments, the shifting offset value may be computed as a function of the ratio between the width and the height of the CU 256. For example, the above-described *center_filter_offset* may be determined as INT(width/height)-1 where INT(x) indicates the integer part of x. The offset may be applied to the filtering window in a template area region located near the shorter or longer dimension of the CU 256.

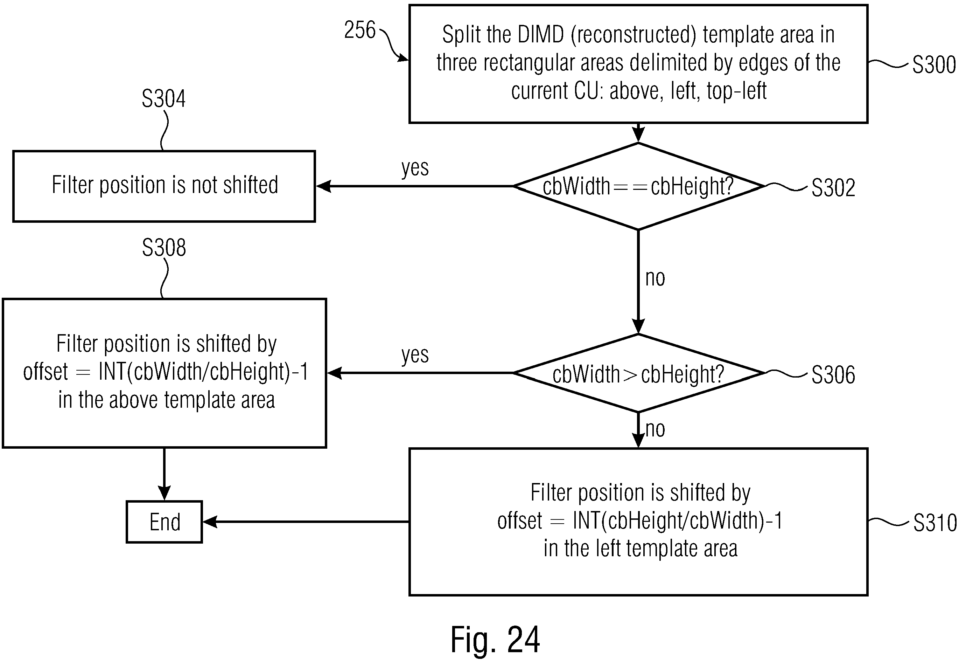

Fig. 24 illustrates a flow diagram for the determination of the shifting offset (in the orthogonal direction) to the edges of the CU to be applied to the filtering window in accordance with embodiments of the second aspect of the present invention. At S300, the reconstructed DIMD template area 258 is split into the respective regions as described above. At S302, it is determined whether the width and the height of the CU 256 are the same. If the width and the height of the CU are the same, i.e., in case the CU has a square shape, the filter position is not shifted, as is indicated at S304. In case the width and height of the CU 256 are different, it is determined at S306 whether the width is greater than the height. In case the width is greater than the height, as is indicated at S308, the filter position is shifted by an offset equal INT(cbwidth/cbheight)-1 in the above template area region. Otherwise, in case the width is lower than the height, the filter position, as is indicated at S310, is shifted by an offset equal INT(cbheight/cbwidth)-1 in the left template area region.

*Filter Position Derivation Using Distance Metrics*

In accordance with yet further embodiments of the second aspect of the present invention, the filter position may be derived by using distance metrics. For example, all of the samples or a proper subset of the samples of the filtering window may be compared using a distance metrics, e.g., the sum of absolute differences, SAD, to certain samples in the CU 256, e.g., to samples projected orthogonally at the edge of the currently processed CU. In other words, the similarity of some or all of the samples within the filtering window and the samples at the edge of the CU is determined for different positions of the filtering window, and a position of the filtering window is selected such that a distance between the samples in the filtering window and the samples at the edge of the CU is at a minimum value, i.e., the respective samples/pixels are similar.

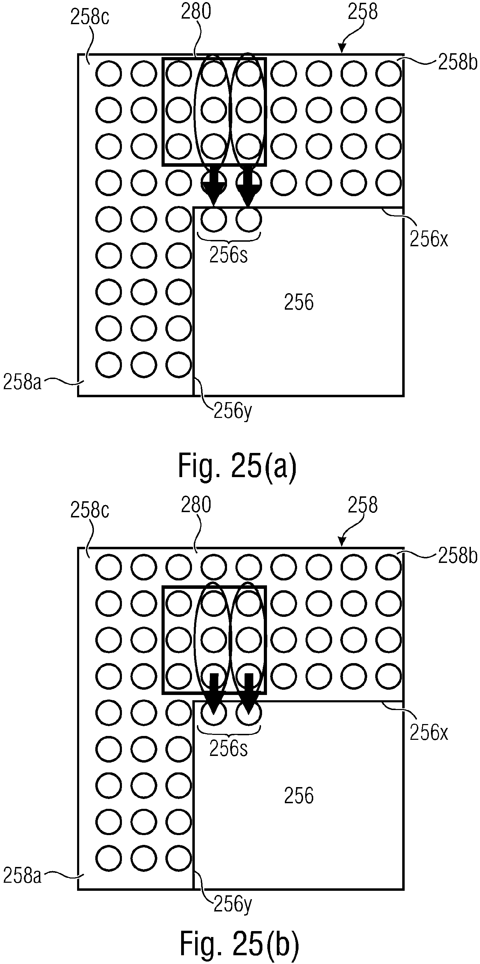

Fig. 25 illustrates candidate filtering window positions for having all or a proper subset of the samples covered by the window compared to projected edge samples of a current CU. Fig. 25(a) illustrates a first candidate filtering window position having a center sample such that the boundary of the filtering window 280 is offset by one row of samples in the template area from the edge 256x of the CU 256. In Fig. 25(b) illustrates a second candidate filtering window position having a center sample such that the boundary of the window 280 is adjacent to the edge 256x of the CU 256, i.e., there is no offset. In the embodiment described with reference to Fig. 25, rather than using all samples of the window 280 for determining the distance to the edge samples 256s, only a subset of samples, more specifically a proper subset of the samples, is used, namely the samples encircled in Fig. 25(a) and Fig. 25(b).

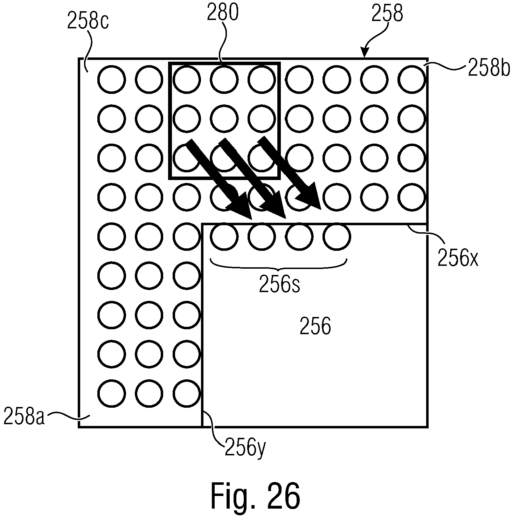

In accordance with other embodiments, the projection direction, indicated in Fig. 25 by the respective arrows pointing from the samples within the filtering window 280 to the edge samples 256s is not orthogonal to the edge 256x of the CU 256, but may be collinear to a main direction of the gradient computed by the convolution kernel. For example, the gradient may be computed using the filtering window and the edge samples to which the projection direction points in the same way as target pixels are determined for a conventional angular intra direction, where are interpolated in VVC, which is described, for example, in section B of reference [22]. Fig. 26 illustrates an embodiment in accordance with which the edge samples 256s of the CU 256 are those indicated by the direction of gradient computed in the filtering window 280, as is indicated by the respective arrows pointing from the window 280 to the edge samples 256s. Some or all of the samples covered by the window 280 may be compared to the edge samples using the above described distance metrics for different filter positions so as to determine the minimum distance and the appropriate offset to be used for the filtering window.

As described above, in accordance with embodiments, the distance may be computed by using SAD between the respective edge samples 256s within the CU 256 and the mean of some or all of the samples orthogonal to the edge and present in the filtering window (see Fig. 25(a) and Fig. 25(b)). The SAD may be cumulated over a whole row for the above template area region or over a whole column for the left template area region or for the rows and columns of the above-left template area region.

When denoting $f$ as the filter candidate index, $N$ as the width of the filtering window, $M$ as the height of the filtering window, $a_{i,j}$ as the sample value at a position $(i,j)$ in the filtering window, and $c_{k,l}$ as the sample value at the position $(k,l)$ in the current CU 256, for the above and left template area regions, the SAD may be computed as follows:

$$SAD\_A_f = \sum_{j,k=0}^{N-1} \left| \frac{1}{M} \sum_{i=0}^{M-1} a_{i,j} - c_{0,k} \right|$$

$$SAD\_L_f = \sum_{j,k=0}^{M-1} \left| \frac{1}{N} \sum_{i=0}^{N-1} a_{j,i} - c_{k,0} \right|$$

In accordance with other embodiments, only the samples present in the middle line and in the same direction as the edge of the CU, may be used in the comparison with the edge samples, and in such a case, the SAD for the above and left template area regions is determined as follows:

$$SAD\_A_f = \sum_{j,k=0}^{N-1} \left| a_{\lfloor M/2 \rfloor, j} - c_{0,k} \right|$$

$$SAD\_L_f = \sum_{j,k=0}^{M-1} \left| a_{j, \lfloor N/2 \rfloor} - c_{k,0} \right|$$

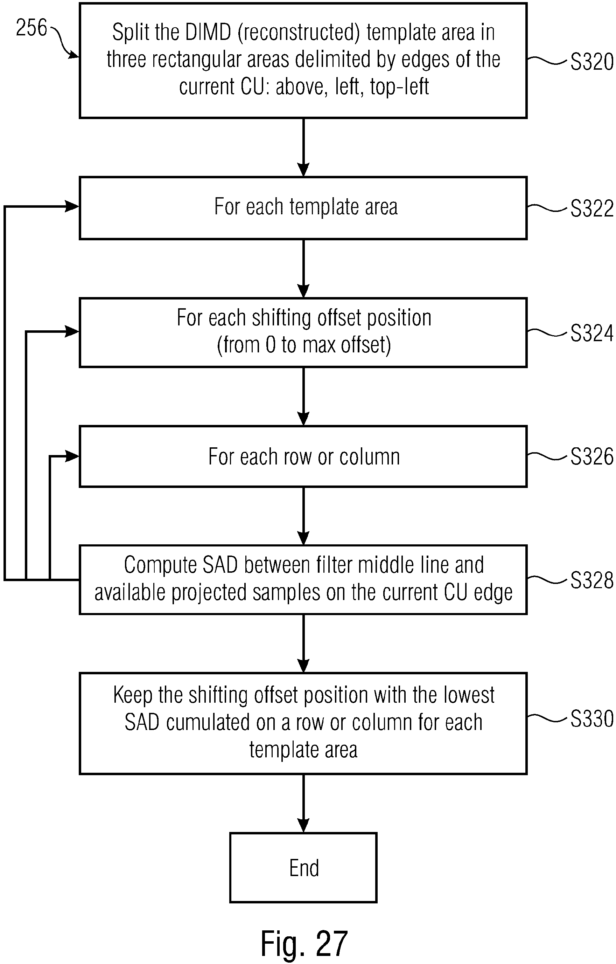

Fig. 27 illustrates a flow diagram for determining the position shifting offset for each template area region in accordance with embodiments of the second aspect of the present invention. As is indicated at S320, initially, the DIMD template area 258 is split into the respective template area regions delimited by the edges of the CU 256, as already described above. Then for each template area region, for each shifting offset position from an offset of 0 to a maximum offset value, and for each row or column, as is indicated at S322, S324 and S326, respectively, the SAD between a filter middle line and the available projected samples on the edge of the CU is computed as is indicated at S328. Once the computation at S328 has been performed for each template area region, for each shifting offset position and for each row or column, at S330 the shifting offset position is kept which has the lowest SAD cumulated on a row or a column for each template area region.

With regard to the top-left template area region, it is noted that orthogonal projections are not possible. Therefore, in accordance with an embodiment, the filtering window positions for the above and left template area regions are determined first, and then, the position of the center sample of the filtering window of the above-left template area region is determined as the intersection of the row of which the center sample of the filtering window for the above template area region is selected and the column of the center sample of the filtering window of the left template area region, thereby providing position continuity between the different template area regions.

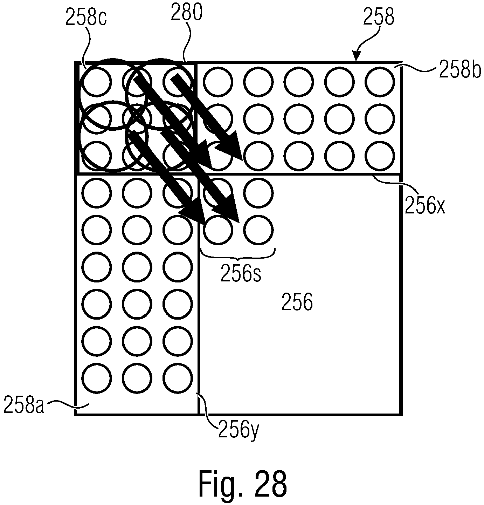

In accordance with other embodiments, for the above-left template area region, some or all of the samples of a filtering window within the above-left template area region may be compared, for example, using SAD, to samples located in the top-left corner of the CU, as is illustrated in Fig. 28 showing a number of top-left samples $256_{TL}$ of the CU 256 which are compared to respective subsets of samples of the filtering window 280 in the top-left template area region. When applying such an approach, it is assumed that the top-left template area region has more samples than those illustrated in Fig. 28 so that the center sample of the filtering window 280 may be located at different positions within the top-left template area region such that the entire window still includes samples.

In accordance with embodiments, for each considered position of the filtering window 280 in the top-left template area region, two horizontal and two vertical CU samples $256_{TL}$, i.e., four samples, are each compared, for example, using SAD, with the four means of the samples of the filtering window, illustrated in Fig. 28 by the circles. To compute the mean, the filtering window is split in four parts: the first part coordinates are from 0 to $\lfloor M/2 \rfloor$ (row) and from 0 to $\lfloor N/2 \rfloor$ (column), the second part coordinates are from $\lfloor M/2 \rfloor$ to $M-1$ (row) and from 0 to $\lfloor N/2 \rfloor$ (column), the third part coordinates are from 0 to $\lfloor M/2 \rfloor$ (row) and from $\lfloor N/2 \rfloor$ to $N-1$ (column) and the fourth part coordinates are from $\lfloor M/2 \rfloor$ to $M-1$ (row) and from $\lfloor N/2 \rfloor$ to $N-1$ (column). The mean is computed in each part and, eventually, the sum of absolute difference between each top-left CU sample and the corresponding part mean is computed. The position of the filtering window having the minimum SAD is selected.

In accordance with another embodiment, for each considered position of the filtering window in the top-left template area, the mean of the samples in the filtering window may be compared with the value of the top-left sample in the CU 256, and the position of the filtering window yielding a minimum difference is selected. In accordance with other embodiments, rather than using a single top-left CU sample, a mean value of a plurality, for example four samples in the top-left corner of the CU may be used.

In accordance with embodiments, when implementing the inventive approach at a decoder, the offset of the filtering window is signaled to the decoder. As a current CU is not available at the decoding-side, the selected position offset is signaled in the bitstream either at the CU, picture or sequence level. The mean position offset may indeed be determined for a whole picture or sequence.

*Filter Position Signaling*

In accordance with the above-described embodiments of the second aspect of the present invention, the filter position is derived from certain characteristics of the template area or the CU, however, the present invention is not limited to such embodiments. Rather, in accordance with further embodiments of the second aspect of the present invention, rather than deriving the filter position either from the characteristics associated with the template area or with the CU, the actual position may be signaled in a similar way as described above with reference to the filter size. For example, an index, like a *dimd_filter_shift_minus1* index may be signaled on the CU/PU or TU level, so as to indicate the position or position shift of the center sample of the filtering window orthogonally relative to an edge of a currently processed CU. The index may be computed at the encoder side and may be selected by a rate distortion optimization, RDO, process where the filter position with a minimum cost, using for example SAD, is selected, and respective entropy coding context also used for the MRL may be used for the index indicating the shifting of a filter position. Thus, other than in the preceding embodiments, a decoder may derive from the encoded data stream the above-mentioned index so as to determine the actual position or offset of the filter from the edges of the currently processed CU.

3rd Aspect Combination of the previous aspects

In accordance with a third aspect of the present invention, the previously described aspects of the present invention may be combined so that in accordance with embodiments of the third aspect, the position of the filtering window relative to the edge of the CU may be changed as well as the filter size.

In accordance with embodiments, the filtering window positions and the size for each of the template area regions may be determined as follows: for each template area region, among the above-left, left and above template area regions, the largest or biggest filter which contains only available samples is selected and then the position of the filter is derived according to the MRL index associated with each template area region. Eventually, if the filter position is shifted, it may be checked whether the filter position still contains only available samples, otherwise, the filter size may be decreased and the shifted position is maintained.

In accordance with another embodiment, the filtering window size may be determined by the number of samples available in the template, and for the largest filter the furthest possible position away from the edge of the CU may be selected.

In accordance with yet other embodiments, the position of the filtering window may be determined by selecting the position where the SAD between the filtering middle line samples, which are parallel to an edge of the CU, and orthogonally projected samples on the edge is at a minimum, and the biggest filter that still contains only available samples at the determined position is selected.

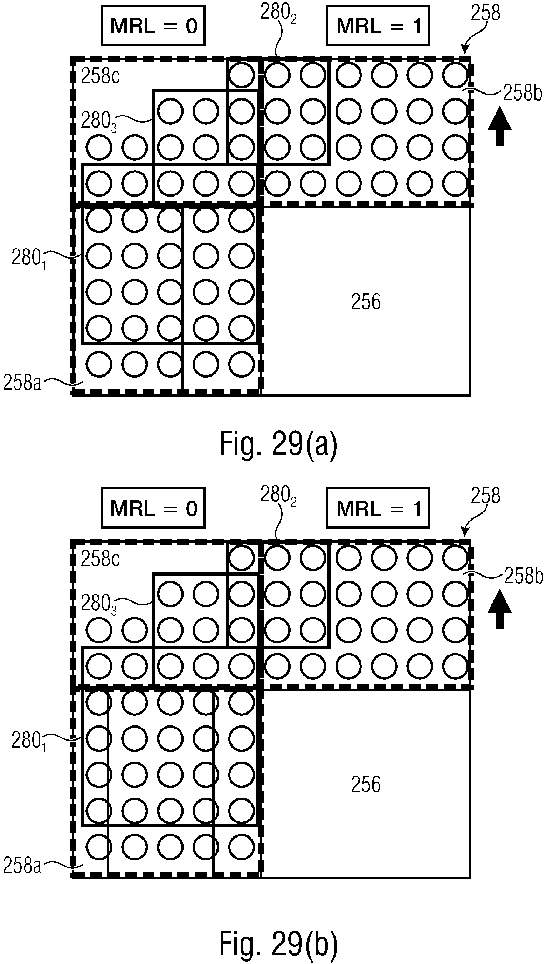

Fig. 29 illustrates embodiments of the third aspect of the present invention, and in Fig. 29(a), the size of the filtering window $280_1$ associated with the left template area region 258(a) is set to 5x5 and its position is not shifted. On the other hand, the position of the filtering window $280_2$ associated with the above template area region 258b is shifted by one sample row and the size is set to 3x3. The position of a filtering window associated with the above-left template area is not shifted and its size is set to 3x3, as illustrated by window 2803. Fig. 29(b) illustrates a further embodiment which, as a difference to the embodiment of Fig. 29(a) sets the size of the filtering window $280_1$ which is associated with the left template area region 258a to 5x5 and shifts the position by one column of samples. The other windows are the same as in Fig. 29(a).

In accordance with embodiments, for determining a size and/or a position dependent on one or more characteristics of the CU and/or the template area, when the CU is greater than a certain size, the samples in a template area are filtered by the filter located such that the filtering window is offset from an edge of the CU by a first number of samples, otherwise the samples in a template area are filtered by the filter located such that the filtering window is adjacent to the CU or is offset from an edge of the CU by a second number of samples which is different from the first number of samples.

Further embodiments

So far, the inventive concept has been described with reference to aspects and embodiments concerning methods for determining a DIMD predictor. In accordance with further embodiments, the present invention also provides encoders/decoders operating in accordance with the principles described above.

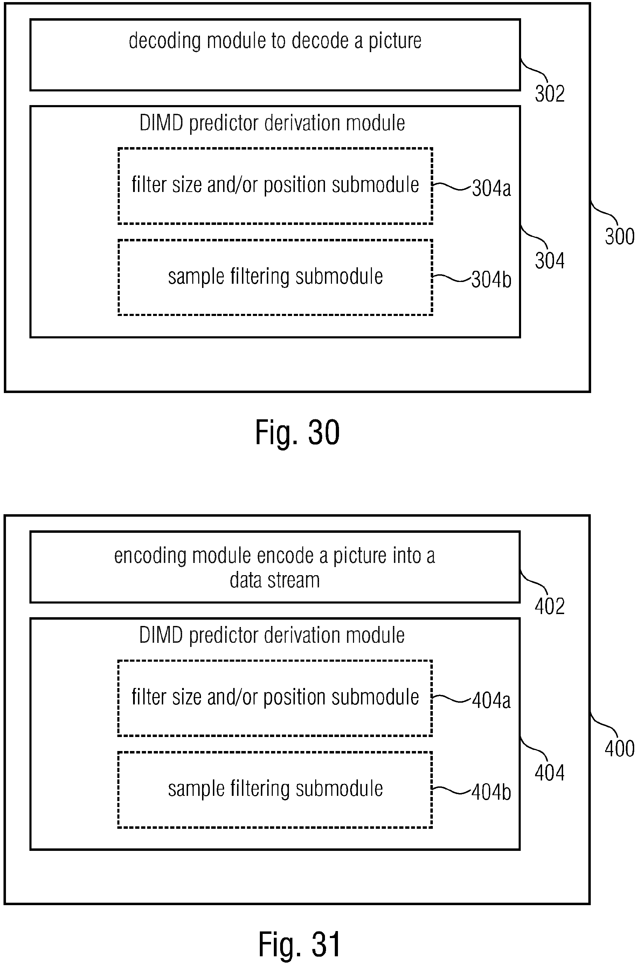

Fig. 30 illustrates a block diagram of a decoder for decoding an encoded data stream, the encoded data stream including data representing a picture in accordance with embodiments of the present invention. The decoder 300 includes the following modules:

302: A first or decoding module configured to decode from the encoded data stream the picture or the picture and information data associated with the picture.
304: A second or DIMD predictor derivation module configured to derive a Decoder-side Intra Mode Derivation, DIMD, predictor for respective samples of a coding unit, CU, of the picture.
304a: A first or filter size and/or position submodule included in the second module and configured to determine a size and/or a position of a filtering window of the filter

- dependent on one or more characteristics of the CU and/or the template area, or
- from the information data associated with the picture.

304b: A second or sample filtering submodule included in the second module and configured to filter respective samples of a template area adjacent to the CU so as to obtain from the template area respective Intra Prediction Modes, IPMs, for deriving the DIMD predictor.

Fig. 31 illustrates a block diagram of an encoder for encoding a picture into an encoded data stream, the encoded data stream including data representing the picture in accordance with embodiments of the present invention. The encoder 400 includes the following modules:

402: A first or encoding module configured to receive the original picture and to encode the picture into the data stream.
404: A second or DIMD predictor derivation module configured to derive a Decoder-side Intra Mode Derivation, DIMD, predictor for respective samples of a coding unit, CU, of the picture.
404a: A first or filter size and/or position submodule included in the second module and configured to determine a size and/or a position of a filtering window of the filter dependent on one or more characteristics of the CU and/or the template area.
404b: A second or sample filtering submodule included in the second module and configured to filter respective samples of a template area adjacent to the CU so as to obtain from the template area respective Intra Prediction Modes, IPMs, for deriving the DIMD predictor.

In accordance with further embodiments, the first module 402 of the encoder 400 is configured to encode information data associated with the picture into the data stream, the information data signaling the size and/or the position of the filtering window of the filter for the DMID process.

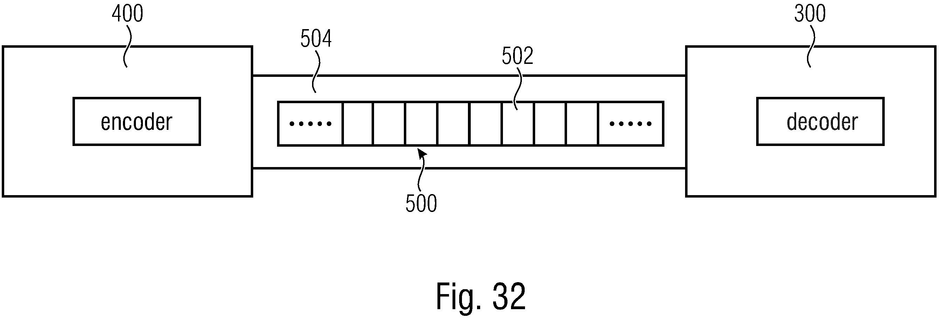

Fig. 32 illustrates a data stream 500 in accordance with embodiments of the present invention, which has encoded thereinto a picture and information data associated with the picture into the data stream. The information data signals the size and/or the position of a filtering window of a filter for a DMID process. For example, the data stream or bitstream 500 may be provided by an encoder 400 that performs the inventive method for encoding the information data 502 into the data stream 500. The data stream 500 is transmitted to a decoder 300 via a wired or wireless transmission medium 504, like cable or a radio link, and the decoder 300 decodes from the data stream 500 the information data 502.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

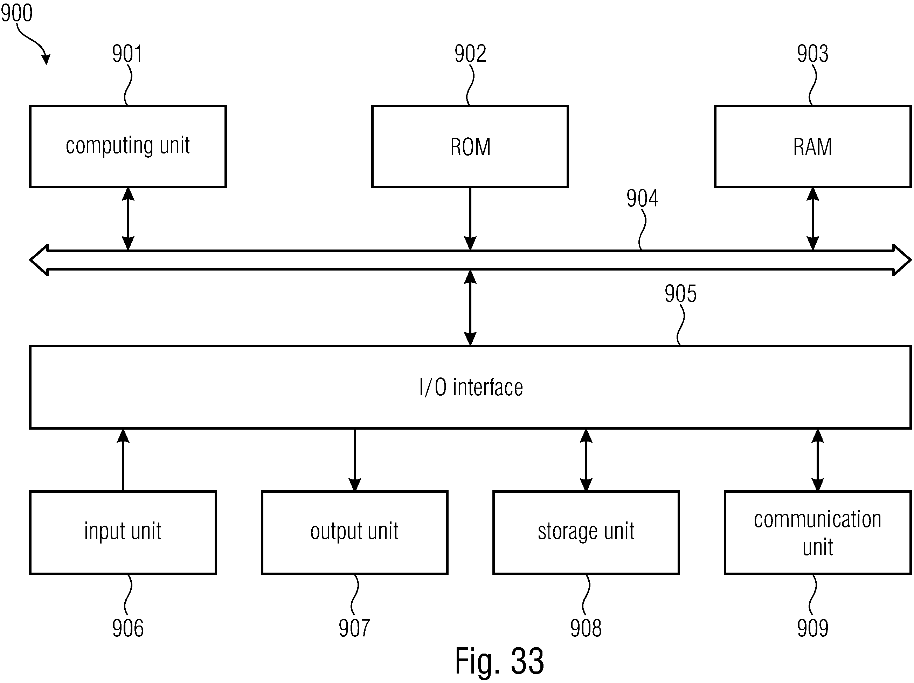

Fig. 33 is a block diagram illustrating an electronic device 900 according to embodiments of the present invention. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present invention described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present invention may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present invention, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It should be understood that the steps may be reordered, added or deleted by using the various forms of flows shown above. For example, the steps described in the present invention may be executed in parallel, sequentially, or in different orders, as long as the desired results of the technical solutions in the present invention can be achieved, and no limitation is imposed herein.

The above-mentioned specific embodiments do not limit the scope of protection of the present invention. It should be understood by those skilled in the art that various modifications, combinations, sub-combinations and replacements may be made depending on design requirements and other factors. Any modifications, equivalent replacements, and improvements made within the principles of the present invention should be included within the protection scope of the present invention.

**References**

[1] H.264: Advanced video coding for generic audiovisual services, https://www.itu.int/rec/T-REC-H.264-202108-P/en

[2] H.265: High efficiency video coding, https://www.itu.int/rec/T-REC-H.265-202108-P/en

[3] H.266: Versatile video coding, https://www.itu.int/rec/T-REC-H.266-202008-I/en

[4] AV1 Bitstream & Decoding Process Specification, http://aomedia.org/av1/specification/

[5] E. Mora et al, "CE3-related: Decoder-side Intra Mode Derivation", JVET-L0164, Macao, October 2018

[6] CE3: Decoder-side Intra Mode Derivation (tests 3.1.1, 3.1.2, 3.1.3 and 3.1.4), JVET-M0094, Marrakech, January 2019

[7] M. Abdoli et al, E. Mora, T. Guionnet, M. Raulet, Non-CE3: Decoder-side Intra Mode Derivation with Prediction Fusion, JVET-N0342, Geneva, March 2019

[8] M. Abdoli et al, "Non-CE3: Decoder-side Intra Mode Derivation with Prediction Fusion Using Planar", JVET-O0449, Gothenburg, July 2019

[9] J. Zhao et al, "EE2-Related: Improvements of Decoder-Side Intra Mode Derivation", JVET-V0087, online, April 2021.

[10] J. Zhao et al, "EE2 Test 2.2: DIMD with multiple blending modes", JVET-WO054, online, July 2021.

[11] X. Li et al, "EE2-related: Implicit derivation of DIMD blend modes", JVET-WO067, online, July 2021.

[12] X. Li et al, "EE2-related: A combination of CIIP and DIMD/TIMD", JVET-WO068, online, July 2021.

[13] J. Zhao et al, "EE2 Related - DIMD with implicitly derived multiple blending modes", JVET-WO126, online, July 2021.

[14] X. Li et al, "EE2-3.1: Combination of CIIP and DIMD/TIMD", JVET-X0098, online, October 2021.

[15] C. Zhou et al, "EE2-related: Optimization on the second mode derivation of DIMD blending mode", JVET-X0115, online, October 2021.

[16] T. Dumas et al, "AHG12: removing a discontinuity in the discrete angle comparison in DIMD", JVET-X0139, online, October 2021.

[17] X. Xiu et al, "AHG12: Removal of floating operations in DIMD and TIMD", JVET-X0149, online, October 2021.

[18] K. Cao et al, "Non-EE2: Fix for histogram of gradients derivation in DIMD mode", JVET-X0156, online, October 2021.

[19] K. Naser et al, "AhG12: Removed DIMD from MPM list of TIMD", JVET-Y0097, online, January 2022.

[20] S. Yoo et al, "EE2-related: Clean-up on DIMD", JVET-Y0131, online, January 2022.

[21] J. Zhao et al, "Non-EE2: DIMD Flag Signalling Clean-up", JVET-Y0144, online, January 2022.

[22] J. Pfaff et al, "Intra Prediction and Mode Coding in VVC", IEEE Transactions on Circuits and Systems for Video Technology, Vol. 31, No. 10, October 2021.

**Claims**

1. A method of determining filter characteristics of a filter for filtering respective samples of a template area (258) adjacent to a coding unit, CU, (256) of a picture (102) so as to obtain from the template area (258) respective Intra Prediction Modes, IPMs, for deriving Decoder-side Intra Mode Derivation, DIMD, predictor for respective samples of the CU (256), the method comprising:
determining (S200) a size and/or a position of a filtering window (280) of the filter

   - dependent on one or more characteristics of the CU (256) and/or the template area (258), or
   - from information data (502) associated with the picture (102).

2. The method of claim 1, wherein, for determining a size and/or a position dependent on one or more characteristics of the CU (256) and/or the template area (258),

   - the size of the filtering window (280) is derived from one or more of

      o a number of available samples in the template area (258),
      o a dimension of the CU (256),
      o a Multiple Reference Line, MRL, index associated with the template area (258), and/or

   - the position of the filtering window (280) is derived from one or more of

      o a number of available samples in the template area (258),
      o dimension of the CU (256),
      o a Multiple Reference Line, MRL, index associated with the template area (258),
      o a distance metrics to samples at an edge of the CU (256).

3. The method of claim 1 or 2, wherein for determining a size and/or a position dependent on one or more characteristics of the CU (256) and/or the template area (258), the template area (258) comprises a plurality of template area regions including an above template area region (258b), a left template area region (258a) and an above-left template area region (258c), and the sizes of the filtering window (280) for the respective template area regions are derived according to the available rows of samples in the above template area region (258b), the available columns of samples in the left template area region (258a), and the available columns and rows of samples in the above-left template area region (258c),

   wherein the method comprises, for each template area region, selecting, from a plurality of predefined filters having filtering windows (280) of different sizes, the filter with a filtering window (280) having a size that corresponds to the available columns and/or rows of samples in the respective template area region, and
   wherein, optionally, for an area in which a filtering window (280) overlaps adjacent template area regions the filter is selected according to

      - the template area region a center sample of the filtering window (280) belongs to, or
      - the template area region having the lowest or highest number of samples contained in the filtering window (280).

4. The method of any one of the preceding claims,

   wherein for determining a size and/or a position dependent on one or more characteristics of the CU (256) and/or the template area (258), when the CU (256) is greater than a certain size, the samples in a template area (258) are filtered by a first filter having a first filtering window size, otherwise, the samples in a template area (258) are filtered by a second filter having a second filtering window size which is different from the first filtering window size, and/or
   wherein for determining a size and/or a position dependent on one or more characteristics of the CU (256) and/or the template area (258), the template area (258) comprises a plurality of template area regions including an above template area region (258b), a left template area region (258a) and an above-left template area region (258c), and, in case the samples available in the template area regions allow using a plurality of filters having different filtering window sizes,

      - when the CU (256) is of square shape, the samples in all template area regions are filtered by the same filter, wherein, optionally, the filter is a filter from the plurality of filters having a maximum or a minimum filtering window size,

- when the CU (256) is of rectangular shape, the samples in a template area region adjacent to the longer side of the CU (256) are filtered by a first filter, and the samples in a template area region adjacent to the shorter side of the CU (256) are filtered by a second filter, the first and second filters having different filtering window sizes, and wherein for filtering the samples in the above-left template area region

o one of the first and second filters is selected according to an availability of samples in the above-left template area region, or

always one of the first filter and the second filter is used.

**5.** The method of any one of the preceding claims, wherein for determining a size and/or a position dependent on one or more characteristics of the CU (256) and/or the template area (258), the template area (258) comprises a plurality of template area regions including an above template area region (258b), a left template area region (258a) and an above-left template area region (258c), and the size of the filtering window (280) for the respective template area regions is derived according to the MRL index, like the **intra_luma_ref_idx**, associated with the respective template area region, wherein

- when the MRL index is zero or when no MRL index is indicated, a first filter having a first filter window size is selected for the template area region,
- when the MRL index is different from zero, e.g., has a certain value or a value exceeding a predefined threshold, a second filter having a second filter window size is selected for the template area region, the second filter window being larger than the first filter window size.

**6.** The method of any one of the preceding claims, wherein for determining a size and/or a position dependent on one or more characteristics of the CU (256) and/or the template area (258), the template area comprises a plurality of template area regions including an above template area region (258b), a left template area region (258a) and an above-left template area region (258c), and a filter having a fixed filtering window size is used for the respective template area regions,

wherein, in case the available rows/columns of samples in a template area region exceed the rows/columns of samples covered by the fixed filtering window size, a position of a central sample of the filtering window (280) is selected so that the filtering window (280) is not adjacent to the CU (256), whereby an edge of the CU (256) and a boundary of the filtering window (280) are offset by a predefined number of samples,

wherein, optionally, in case the available rows/columns of samples in a template area region is equal to the rows/columns of samples covered by the fixed filtering window size, the size of the filtering window (280) is reduced so that the rows and/or columns of samples in the template area region are covered by the filtering window (280).

**7.** The method of any one of the preceding claims,

wherein for determining a size and/or a position dependent on one or more characteristics of the CU (256) and/or the template area (258), when the CU (256) is greater than a certain size, the samples in a template area (258) are filtered by the filter located such that the filtering window (280) is offset from an edge of the CU (256) by a first number of samples, otherwise the samples in a template area (258) are filtered by the filter located such that the filtering window (280) is adjacent to the CU (256) or is offset from an edge of the CU (256) by a second number of samples which is different from the first number of samples, and/or

wherein for determining a size and/or a position dependent on one or more characteristics of the CU (256) and/or the template area (258), the template area (258) comprises a plurality of template area regions including an above template area region (258b), a left template area region (258a) and an above-left template area region (258c), and a filter having a fixed filtering window size is used for the respective template area regions, wherein,

- when the CU (256) is of square shape, the filtering window (280) is

o not adjacent to the CU (256) such that an edge of the CU (256) and a boundary of the filtering window (280) are offset by a predefined number of samples, or
o adjacent to the CU (256) such that an edge of the CU (256) and a boundary of the filtering window (280) are not offset,

- when the CU (256) is of rectangular shape,

o in a template area region adjacent to the longer side of the CU (256) the filtering window (280) is not adjacent to the CU (256) such that an edge of the CU (256) and a boundary of the filtering window (280) are offset by a predefined number of samples, and in a template area region adjacent to the shorter side of the CU (256) the filtering window (280) is adjacent to the CU (256) such that an edge of the CU (256) and a boundary of the filtering window (280) are not offset, or

o in a template area region adjacent to the shorter side of the CU (256) the filtering window (280) is not adjacent to the CU (256) such that an edge of the CU (256) and a boundary of the filtering window (280) are offset by a predefined number of samples, and in a template area region adjacent to the longer side of the CU (256) the filtering window (280) is adjacent to the CU (256) such that an edge of the CU (256) and a boundary of the filtering window (280) are not offset, and

wherein, optionally, the offset is computed as a function of a ratio between a width and a height of the CU (256).

8. The method of any one of the preceding claims, wherein for determining a size and/or a position dependent on one or more characteristics of the CU (256) and/or the template area (258), the template area (258) comprises a plurality of template area regions including an above template area region (258b), a left template area region (258a) and an above-left template area region (258c), and a filter having a fixed filtering window size is used for the respective template area regions,

wherein the position of the filtering window (280) for the respective template area regions is derived according to the MRL index, like the **intra_luma_ref_idx**, associated with the respective template area region,
wherein

- when the MRL index is zero or when no MRL index is indicated, the filtering window (280) is adjacent to the CU (256) such that an edge of the CU (256) and a boundary of the filtering window (280) are not offset,
- when the MRL index is different from zero, e.g., has a certain value or a value exceeding a predefined threshold, the filtering window (280) is not adjacent to the CU (256) such that an edge of the CU (256) and a boundary of the filtering window (280) are offset by a predefined number of samples,

9. The method of any one of the preceding claims, wherein for determining a size and/or a position dependent on one or more characteristics of the CU (256) and/or the template area (258), the template area (258) comprises a plurality of template area regions including an above template area region (258b), a left template area region (258a) and an above-left template area region (258c), and a filter having a fixed filtering window size is used for the respective template area regions,

wherein the position of the filtering window (280) for the above and left template area regions is derived by comparing, for different offsets between an edge of the CU (256) and a boundary of the filtering window (280), one or more or all samples contained in the filtering window (280) using a distance metrics, like the Sum of Absolute Differences, SAD, to samples projected at an edge of the CU (256), and by selecting the offset yielding a minimum distance,
wherein, optionally, the offset selection is performed for an entire template area region or for each center sample of the filtering window (280),
wherein, optionally, the position of the filtering window (280) for the above-left template area region is derived as follows:

- following the determination of the filtering window positions in the above and left template area regions, determining the center sample of the filtering window (280) of the above-left template area region as the intersection of the row of the center sample of a filtering window (280) of the above template area region and the column of the center sample of a filtering window (280) of the left template area region, or
- for different positions of the filtering window (280) in the above-left template area region, comparing one or more or all samples contained in the filtering window (280) with a distance metrics, like the Sum of Absolute Differences, SAD, to a plurality of samples located in the above-left corner of the CU (256), and by selecting the position yielding a minimum distance.

10. The method of any one of the preceding claims, wherein, when determining a size and/or a position from information data (502) associated with the picture (102), the information data (502) associated with the picture signals the filter size and/or the filter position using a high-level syntax structure, such as Picture Parameter Set, a Sequence Parameter Set, or a Picture Header, and

wherein, optionally, the high-level syntax structure comprises

   - a syntax element, like **sps_dimd_filter_size**, indicating which filter and/or which filter size to be used during the DIMD process, and/or
   - an index, like **dimd_filter_shift_minus1**, indicating a position or a position shift, relative to an edge of the CU (256) in an orthogonal direction, of a center sample of the filtering window (280).

11. A non-transitory computer-readable storage medium comprising instructions which, when executed by a computer, cause the computer to carry out the method of any one of claims claim 1 to 10.

12. An apparatus (300) for decoding an encoded data stream (500), the encoded data stream (500) including data representing a picture (102), the apparatus (300) comprising:

   a first module (302) configured to decode from the encoded data stream (500) the picture (102) or the picture and information data (502) associated with the picture (102), and
   a second module (304) configured to derive a Decoder-side Intra Mode Derivation, DIMD, predictor for respective samples of a coding unit, CU, (256) of the picture (102), the second module (304) comprising:

      a first submodule (304a) configured to determine a size and/or a position of a filtering window (280) of the filter

         - dependent on one or more characteristics of the CU (256) and/or the template area (258), or
         - from the information data (502) associated with the picture (102), and

      a second submodule (304b) configured to filter respective samples of a template area (258) adjacent to the CU (256) so as to obtain from the template area (258) respective Intra Prediction Modes, IPMs, for deriving the DIMD predictor.

13. An apparatus (400) for encoding a picture (102) into an encoded data stream (500), the encoded data stream (500) including data representing the picture (102), the apparatus (400) comprising:

   a first module (402) configured to receive the original picture (102) and to encode the picture (102) into the data stream (500), and
   a second module (404) configured to derive a Decoder-side Intra Mode Derivation, DIMD, predictor for respective samples of a coding unit, CU, (256) of the picture (102), the second module (404) comprising:

   a first submodule (404a) configured to determine a size and/or a position of a filtering window (280) of the filter dependent on one or more characteristics of the CU (256) and/or the template area (258), and
   a second submodule (404b) configured to filter respective samples of a template area (258) adjacent to the CU (256) so as to obtain from the template area (258) respective Intra Prediction Modes, IPMs, for deriving the DIMD predictor.

14. The apparatus of claim 13, wherein the first module (404a) is configured to encode information data (502) associated with the picture (102) into the data stream (500), the information data (502) signaling the size and/or the position of the filtering window (280) of the filter for the DMID process.

15. A data stream (500) having encoded thereinto a picture (102) and information data (502) associated with the picture (102) into the data stream (500),
wherein the information data (502) signals the size and/or the position of a filtering window (280) of a filter for a DMID process.

Fig. 1

EP 4 258 662 A1

Fig. 2

EP 4 258 662 A1

Fig. 3

258

250

252

template

reconstructed area

current
block

unavailable area

254

256

## Fig. 4(a)

258

262

259

256

ampl (ipm)

M1

M2

260

ipm

## Fig. 4(b)

Fig. 5

$$\omega_1 = \frac{43}{64} \times \frac{ampl(M_1)}{ampl(M_1) + ampl(M_2)}$$

$$\omega_2 = \frac{43}{64} \times \frac{ampl(M_2)}{ampl(M_1) + ampl(M_2)}$$

$$\omega_3 = \frac{21}{64}$$

$$\sum_{i=1}^{3} \omega_i \times pred_i$$

EP 4 258 662 A1

256

Analyze neighborhood:
Determine number of Intra Above
and Intra Left available samples — S100

Build Histogram of Gradients:
Build HoG for available Left, Above
and Above-Left templates — S102

Determine at most two most represented Intra
angular modes by their amplitude in the HoG — S104

How many selected modes? — S106

0 → Use Planar (default mode) — S108

1 → Use the selected Intra angular
mode as DIMD predictor — S110

2 → Determine blending weight of each selected
mode according to their amplitude ratio. Planar
mode is used for blending with 1/3 weight. — S112

Compute prediction for each of selected
Intra angular modes — S114

Obtain the DIMD predictor:
Blend the 2 selected modes and
Planar mode with determined weighting — S116

End

Fig. 6

Fig. 7

Fig. 8

determining a size and/or a position of a filtering
window of the filter
- dependent on one or more characteristics of the
  CU and/or the template area, or
- from information data associated with the
  picture

~S200

# Fig. 9

| +2 | +2 | +4 | +2 | +2 |
|---|---|---|---|---|
| +1 | +1 | +2 | +1 | +1 |
| 0 | 0 | 0 | 0 | 0 |
| -1 | -1 | -2 | -1 | -1 |
| -2 | -2 | -4 | -2 | -2 |

Gx

| +2 | +1 | 0 | -1 | -2 |
|---|---|---|---|---|
| +2 | +1 | 0 | -1 | -2 |
| +4 | +2 | 0 | -2 | -4 |
| +2 | +1 | 0 | -1 | -2 |
| +2 | +1 | 0 | -1 | -2 |

Gy

# Fig. 10

| +9 | +9 | +9 | +9 | +9 |
|---|---|---|---|---|
| +9 | +5 | +5 | +5 | +9 |
| -7 | -3 | 0 | -3 | -7 |
| -7 | -3 | -3 | -3 | -7 |
| -7 | -7 | -7 | -7 | -7 |

Gx

| +9 | +9 | -7 | -7 | -7 |
|---|---|---|---|---|
| +9 | +5 | -3 | -3 | -7 |
| +9 | +5 | 0 | -3 | -7 |
| +9 | +5 | -3 | -3 | -7 |
| +9 | +9 | -7 | -7 | -7 |

Gy

# Fig. 11

| +2 | +2 | +2 | +2 | +2 |
|----|----|----|----|----|
| +1 | +1 | +1 | +1 | +1 |
| 0  | 0  | 0  | 0  | 0  |
| -1 | -1 | -1 | -1 | -1 |
| -2 | -2 | -2 | -2 | -2 |

Gx

| +2 | +1 | 0 | -1 | -2 |
|----|----|---|----|----|
| +2 | +1 | 0 | -1 | -2 |
| +2 | +1 | 0 | -1 | -2 |
| +2 | +1 | 0 | -1 | -2 |
| +2 | +1 | 0 | -1 | -2 |

Gy

## Fig. 12

$\dfrac{1}{159}$

| 2 | 4  | 5  | 4  | 2 |
|---|----|----|----|---|
| 4 | 9  | 12 | 9  | 4 |
| 5 | 12 | 15 | 12 | 5 |
| 4 | 9  | 12 | 9  | 4 |
| 2 | 4  | 5  | 4  | 2 |

## Fig. 13

Fig. 14(a)

Fig. 14(b)

Fig. 15

256

| Split the DIMD (reconstructed) template area in three rectangular areas delimited by edges of the current CU: above, left, top-left | S210 |

| For each template area | S212 |

| Determine number of available lines and/or columns in the template area | S214 |

| Order filters by decreasing size (biggest first) | S216 |

| For each filter size | S218 |

| Select a filter | S220 |

Is filtering window contained in template area? — S222

no

yes

| End |

Fig. 16

Fig. 17(a)

Fig. 17(b)

Fig. 17(c)

S230

Split the DIMD (reconstructed) template area in three rectangular areas delimited by edges of the current CU: above, left, top-left

256

S232

cbWidth=cbHeight?

yes

234

Select the biggest filter which filtering window is contained in each available template areas

no

S236

cbWidth>cbHeight?

yes

Allocate the biggest filter to the above template area And allocate the smaller filter to the left and top-left template area

S238

no

S240

Allocate the smallest filter to the above and top-left template area and allocate the biggest filter to the left template area

End

Fig. 18

Fig. 19

EP 4 258 662 A1

Fig. 20

Fig. 21(a)

Fig. 21(b)

256 ⟶

**S270** — Split the DIMD (reconstructed) template area in three rectangular areas delimited by edges of the current CU: above, left, top-left

**S272** — For each template area

**S274** — Get intra_luma_ref_idx of the template area

**S276** — Set center_filter_offset=intra_luma_ref_idx (default value is 0)

**S278** — Shift filtering window by center_filter_offset sample(s) in the orthogonal direction to the current CU edge

End

Fig. 22

Fig. 23(a)

Fig. 23(b)

Fig. 24

Fig. 25(a)

Fig. 25(b)

Fig. 26

256 → Split the DIMD (reconstructed) template area in three rectangular areas delimited by edges of the current CU: above, left, top-left — S320

For each template area — S322

For each shifting offset position (from 0 to max offset) — S324

For each row or column — S326

Compute SAD between filter middle line and available projected samples on the current CU edge — S328

Keep the shifting offset position with the lowest SAD cumulated on a row or column for each template area — S330

End

## Fig. 27

Fig. 28

Fig. 29(a)

Fig. 29(b)

decoding module to decode a picture

302

DIMD predictor derivation module

filter size and/or position submodule

304a

sample filtering submodule

304b

304

300

## Fig. 30

encoding module encode a picture into a data stream

402

DIMD predictor derivation module

filter size and/or position submodule

404a

sample filtering submodule

404b

404

400

## Fig. 31

Fig. 32

Fig. 33

Europäisches
Patentamt

European
Patent Office

Office européen
des brevets

# EUROPEAN SEARCH REPORT

Application Number

EP 22 16 7219

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/070441 A1 (XIU XIAOYU [US] ET AL) 3 March 2022 (2022-03-03) | 1-8, 10-15 | INV. H04N19/463 |
| A | * paragraph [0058] – paragraph [0062]; figures 9-10 * | 9 | H04N19/11 H04N19/117 H04N19/14 |
| A | US 2022/070451 A1 (ABDOLI MOHSEN [FR]) 3 March 2022 (2022-03-03) * paragraph [0311] – paragraph [0321] * | 1-15 | H04N19/176 H04N19/593 |
| A,D | MORA (ATEME) E ET AL: "CE3: Decoder-side Intra Mode Derivation (tests 3.1.1, 3.1.2, 3.1.3 and 3.1.4)", 13. JVET MEETING; 20190109 – 20190118; MARRAKECH; (THE JOINT VIDEO EXPLORATION TEAM OF ISO/IEC JTC1/SC29/WG11 AND ITU-T SG.16 ), , no. JVET-M0094 3 January 2019 (2019-01-03), XP030200347, Retrieved from the Internet: URL:http://phenix.int-evry.fr/jvet/doc_end _user/documents/13_Marrakech/wg11/JVET-M00 94-v2.zip JVET-M0094-v2.docx [retrieved on 2019-01-03] * sections 1-2, especially 2.2 * | 3 | |

**TECHNICAL FIELDS SEARCHED (IPC)**

H04N

The present search report has been drawn up for all claims

| Place of search | Date of completion of the search | Examiner |
|---|---|---|
| Berlin | 1 September 2022 | Kontopodis, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 7219

This annex lists the patent family members relating to the patent documents cited in the above-mentioned European search report.
The members are as contained in the European Patent Office EDP file on
The European Patent Office is in no way liable for these particulars which are merely given for the purpose of information.

01-09-2022

| Patent document cited in search report | | Publication date | Patent family member(s) | | Publication date |
|---|---|---|---|---|---|
| US 2022070441 | A1 | 03-03-2022 | AU | 2019419454 A1 | 15-07-2021 |
| | | | CN | 113228634 A | 06-08-2021 |
| | | | EP | 3906672 A1 | 10-11-2021 |
| | | | JP | 2022516094 A | 24-02-2022 |
| | | | KR | 20210118070 A | 29-09-2021 |
| | | | TW | 202038607 A | 16-10-2020 |
| | | | US | 2022070441 A1 | 03-03-2022 |
| | | | WO | 2020142279 A1 | 09-07-2020 |
| US 2022070451 | A1 | 03-03-2022 | EP | 3962080 A1 | 02-03-2022 |
| | | | US | 2022070451 A1 | 03-03-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *H.264: Advanced video coding for generic audiovisual services, https://www.itu.int/rec/T-REC-H.264-202108-P/en*
- *H.266: Versatile video coding, https://www.itu.int/rec/T-REC-H.266-202008-I/en*
- *AV1 Bitstream & Decoding Process Specification, http://aomedia.org/av1/specification*
- **E. MORA et al.** CE3-related: Decoder-side Intra Mode Derivation. *JVET-L0164, Macao,* October 2018
- CE3: Decoder-side Intra Mode Derivation (tests 3.1.1, 3.1.2, 3.1.3 and 3.1.4). *JVET-M0094, Marrakech,* January 2019
- **M. ABDOLI ; E. MORA ; T. GUIONNET ; M. RAULET et al.** Non-CE3: Decoder-side Intra Mode Derivation with Prediction Fusion. *JVET-N0342, Geneva,* March 2019
- **M. ABDOLI et al.** Non-CE3: Decoder-side Intra Mode Derivation with Prediction Fusion Using Planar. *JVET-O0449, Gothenburg,* July 2019
- **J. ZHAO et al.** EE2-Related: Improvements of Decoder-Side Intra Mode Derivation. *JVET-V0087,* April 2021
- **J. ZHAO et al.** EE2 Test 2.2: DIMD with multiple blending modes. *JVET-WO054,* July 2021
- **X. LI et al.** EE2-related: Implicit derivation of DIMD blend modes. *JVET-WO067,* July 2021
- **X. LI et al.** EE2-related: A combination of CIIP and DIMD/TIMD. *JVET-WO068,* July 2021
- **J. ZHAO et al.** EE2 Related - DIMD with implicitly derived multiple blending modes. *JVET-WO126,* July 2021
- **X. LI et al.** EE2-3.1: Combination of CIIP and DIMD/TIMD. *JVET-X0098,* October 2021
- **C. ZHOU et al.** EE2-related: Optimization on the second mode derivation of DIMD blending mode. *JVET-X0115,* October 2021
- **T. DUMAS et al.** AHG12: removing a discontinuity in the discrete angle comparison in DIMD. *JVET-X0139,* October 2021
- **X. XIU et al.** AHG12: Removal of floating operations in DIMD and TIMD. *JVET-X0149,* October 2021
- **K. CAO et al.** Non-EE2: Fix for histogram of gradients derivation in DIMD mode. *JVET-X0156,* October 2021
- **K. NASER et al.** AhG12: Removed DIMD from MPM list of TIMD. *JVET-Y0097,* January 2022
- **S. YOO et al.** EE2-related: Clean-up on DIMD. *JVET-Y0131,* January 2022
- **J. ZHAO et al.** Non-EE2: DIMD Flag Signalling Clean-up. *JVET-Y0144,* January 2022
- **J. PFAFF et al.** Intra Prediction and Mode Coding in VVC. *IEEE Transactions on Circuits and Systems for Video Technology,* October 2021, vol. 31 (10